# EUROPÄISCHE PATENTSCHRIFT

(11) **EP 4 275 971 B1**
(45) Veröffentlichungstag und Bekanntmachung des Hinweises auf die Patenterteilung: **22.04.2026**
(21) Anmeldenummer: 23172142.4
(22) Anmeldetag: 08.05.2023
(51) Int. Cl.: B60S 3/04

(54) **SICHERUNGSVORRICHTUNG ZUM KONTAKTBEHAFTETEN ERFASSEN EINES HINDERNISSES UND FAHRZEUGBEHANDLUNGSANLAGE MIT EINER SICHERUNGSVORRICHTUNG**
SAFETY DEVICE FOR DETECTING AN OBSTACLE BY CONTACT AND VEHICLE TREATMENT SYSTEM WITH A SAFETY DEVICE
DISPOSITIF DE SÉCURITÉ POUR DÉTECTER DES OBSTACLES EN CONTACT ET INSTALLATION DE TRAITEMENT DE VÉHICULES DOTÉE D'UN DISPOSITIF DE SÉCURITÉ

(30) Priorität: 12.05.2022 DE 102022111978
(43) Veröffentlichungstag der Anmeldung: 15.11.2023
(73) Patentinhaber: Alfred Kärcher SE & Co. KG, 71364 Winnenden (DE)
(72) Erfinder: Speckmaier, Jens, 71364 Winnenden (DE); Oppenländer, Simon, 71364 Winnenden (DE); Speckmaier, André, 71364 Winnenden (DE)
(74) Vertreter: DTS Patent- und Rechtsanwälte PartmbB

(56) Entgegenhaltungen:
- JP-A- 2010 155 538
- JP-A- H1 086 799

## Beschreibung

Die Erfindung betrifft eine Sicherungsvorrichtung zum kontaktbehafteten Erfassen eines Hindernisses, insbesondere eines Fahrzeugs, an einer Fahrzeugbehandlungsanlage, insbesondere einer Fahrzeugwaschanlage, umfassend eine Halteeinrichtung, welche an einer Trageinrichtung der Fahrzeugbehandlungsanlage festlegbar oder festgelegt ist, zum beweglichen Festlegen der Sicherungsvorrichtung an der Trageinrichtung, eine Pralleinrichtung, welche durch die Halteeinrichtung gehalten wird und die durch einen Kontakt mit dem Hindernis aus einer Nichtbetätigungsstellung in mindestens eine Betätigungsstellung auslenkbar ist, eine Sensoreinrichtung, die mit der Pralleinrichtung in Wirkverbindung steht und mit welcher wenigstens eine Einnahme der Nichtbetätigungsstellung und/oder einer Betätigungsstellung durch die Pralleinrichtung erfassbar ist, und eine Rückstelleinrichtung, die mit der Pralleinrichtung gekoppelt und mit der Fahrzeugbehandlungsanlage koppelbar oder gekoppelt ist, um die Pralleinrichtung ohne Kontakt mit dem Fahrzeug in die Nichtbetätigungsstellung zu überführen.

Außerdem betrifft die Erfindung eine Fahrzeugbehandlungsanlage zum Behandeln, insbesondere zum Waschen und/oder Polieren, von Fahrzeugen. Die Fahrzeugbehandlungsanlage umfasst eine Sicherungsvorrichtung der vorstehend beschriebenen Art und eine Trageinrichtung, insbesondere eine Tragsäule, zum Tragen mindestens eines Fahrzeugbehandlungsaggregats, wobei die Sicherungsvorrichtung an der Trageinrichtung zu einem Fahrzeugbehandlungsplatz, insbesondere einem Fahrzeugwaschplatz, hin angebracht ist. Die Sicherungsvorrichtung kann die Trageinrichtung zum Beispiel in Richtung auf den Fahrzeugbehandlungsplatz absichern.

Sicherungsvorrichtungen der eingangs genannten Art finden beispielsweise bei Fahrzeugbehandlungsanlagen der eingangs genannten Art Verwendung zum Sicherstellen, dass ein Hindernis nicht mit der Trageinrichtung oder einem durch an der Trageinrichtung angeordneten Fahrzeugbehandlungsaggregat kollidiert, wenn beispielsweise die Trageinrichtung in Richtung auf das Hindernis bewegt wird. Bei dem Hindernis handelt es sich insbesondere um ein Fahrzeug, es kann jedoch auch eine Person oder ein sonstiges Hindernis sein. Indem die Pralleinrichtung auslenkbar gestaltet und die Einnahme einer Betätigungsstellung erfassbar ist, kann vorzugsweise ein Schaden, insbesondere ein Fahrzeugschaden, ein Personenschaden oder ein Schaden der Fahrzeugbehandlungsanlage vermieden werden.

Im Stand der Technik sind Sicherungsvorrichtungen der eingangs genannten Art bekannt. Beispielsweise beschreibt die JP H10-86799 A eine Sicherungsvorrichtung, bei der eine Pralleinrichtung bei Kontakt mit dem Außenspiegel des Fahrzeuges den Waschvorgang unterbricht, um eine Beschädigung des Fahrzeuges oder der Fahrzeugbehandlungsanlage zu verhindern.

In der JP 2010-155538 A ist eine Sicherungsvorrichtung einer Fahrzeugbehandlungsanlage beschrieben, die über eine Pralleinrichtung eine Berührung mit einem Fahrzeug oder einer Person erkennt und entsprechend die Bewegung eines Portalrahmens anhält.

Wünschenswert wäre es, eine Einnahme der Nichtbetätigungsstellung und/oder eine Einnahme einer aus der Nichtbetätigungsstellung ausgelenkten Betätigungsstellung zuverlässig zu unterscheiden.

Aufgabe der vorliegenden Erfindung ist es, eine Sicherungsvorrichtung vorzusehen, mittels welcher eine Einnahme der Nichtbetätigungsstellung und/oder einer aus der Nichtbetätigungsstellung ausgelenkten Betätigungsstellung zuverlässig unterscheidbar ist.

Diese Aufgabe wird durch eine erfindungsgemäße Sicherungsvorrichtung zum kontaktbehafteten Erfassen eines Hindernisses, insbesondere eines Fahrzeugs, an einer Fahrzeugbehandlungsanlage, insbesondere einer Fahrzeugwaschanlage gelöst, umfassend eine Halteeinrichtung, welche an einer Trageinrichtung der Fahrzeugbehandlungsanlage festlegbar oder festgelegt ist, zum beweglichen Festlegen der Sicherungsvorrichtung an der Trageinrichtung, eine Pralleinrichtung, welche durch die Halteeinrichtung gehalten wird und die durch einen Kontakt mit dem Hindernis aus einer Nichtbetätigungsstellung in mindestens eine Betätigungsstellung auslenkbar ist, eine Sensoreinrichtung, die mit der Pralleinrichtung in Wirkverbindung steht und mit welcher wenigstens eine Einnahme der Nichtbetätigungsstellung und/oder einer Betätigungsstellung durch die Pralleinrichtung erfassbar ist, und eine Rückstelleinrichtung, die mit der Pralleinrichtung gekoppelt und mit der Fahrzeugbehandlungsanlage, beispielsweise deren Trageinrichtung, koppelbar oder gekoppelt ist, um die Pralleinrichtung ohne Kontakt mit dem Fahrzeug in die Nichtbetätigungsstellung zu überführen, wobei über die feste Kopplung der Rückstelleinrichtung mit der Pralleinrichtung ein Drehmoment zwischen der Rückstelleinrichtung und der Pralleinrichtung übertragbar ist und/oder durch die feste Kopplung der Rückstelleinrichtung mit einer an der Fahrzeugbehandlungsanlage festlegbaren oder festgelegten Rückstell-Lagereinrichtung ein Drehmoment zwischen der Rückstelleinrichtung und der Fahrzeugbehandlungsanlage übertragbar ist, wobei bei einer Auslenkung der Pralleinrichtung aus der Nichtbetätigungsstellung in eine Betätigungsstellung die Auslenkung infolge des übertragbaren Drehmoments zu einer Verlängerung oder Stauchung sowie zu einem Verbiegen und/oder einer Torsion der Rückstelleinrichtung führt, wobei die Sensoreinrichtung zum berührungslosen, insbesondere induktiven und/oder kapazitiven Erfassen der Pralleinrichtung in deren Nichtbetätigungsstellung oder in einer aus der Nichtbetätigungsstellung ausgelenkten Betätigungsstellung eingerichtet ist.

Indem zwischen der Rückstelleinrichtung und der Pralleinrichtung und/oder zwischen der Rückstelleinrichtung und der Fahrzeugbehandlungsanlage ein Drehmoment übertragbar ist, kann die Rückstelleinrichtung vorzugsweise verhältnismäßig steif an die Pralleinrichtung einerseits und/oder die Fahrzeugbehandlungsanlage andererseits angebunden sein. Hierdurch kann die Pralleinrichtung zuverlässig in die Nichtbetätigungsstellung überführt und damit rückgestellt und vorzugsweise in der Nichtbetätigungsstellung entgegen einer Auslenkung gehalten werden. Dies ist zum Beispiel vorteilhaft, um eine unbeabsichtigte Auslenkung zu vermeiden, zum Beispiel infolge der sich bewegenden Fahrzeugbehandlungsanlage.

Vorzugsweise kann durch die erfindungsgemäße Ausgestaltung mindestens ein weiteres Rückstellelement und/oder Halteelement für die Pralleinrichtung eingespart werden, so dass die Sicherungsvorrichtung eine konstruktiv einfache Ausgestaltung aufweist.

Als Vergleichsbeispiel wird beispielsweise angenommen, dass eine Zugfeder zum Rückstellen des der Pralleinrichtung eingesetzt wird. Diese Zugfeder kann insbesondere bei betragsmäßig großen Auslenkungen zu einer vergleichsweise lang andauernden Schwingung um die Nichtbetätigungsstellung führen. Bei betragsmäßig kleinen Auslenkungen kann es vorkommen, dass nur eine geringe Rückstellkraft aufgebracht wird, wodurch eine Rückstellung verzögert werden kann. Im Vergleich dazu kann die zum Drehmoment-Übertragen eingerichtete Kopplung die Pralleinrichtung vorzugsweise genauer, zuverlässiger und/oder rascher in die Nichtbetätigungsstellung rückstellen und vorzugsweise zuverlässiger in der Nichtbetätigungsstellung halten.

Als "Kopplung" kann vorliegend beispielsweise eine Verbindung aufgefasst werden, beispielsweise eine Verbindung der Rückstelleinrichtung mit der Pralleinrichtung und/oder mit der Trageinrichtung der Fahrzeugbehandlungsanlage.

Unter einer Einnahme der Nichtbetätigungsstellung können vorliegend insbesondere ein Übergang von einer Betätigungsstellung in die Nichtbetätigungsstellung und/oder ein Eingenommen-Sein im Sinne eines Verbleibens in der Nichtbetätigungsstellung verstanden werden. Unter einer Einnahme einer Betätigungsstellung können vorliegend insbesondere ein Übergang von der Nichtbetätigungsstellung in eine Betätigungsstellung und/oder ein Eingenommen-Sein im Sinne eines Verbleibens in einer bzw. der Betätigungsstellung verstanden werden.

Ausgehend von der Nichtbetätigungsstellung kann ein Kontakt mit dem Hindernis eine Auslenkung der Pralleinrichtung, insbesondere in mindestens eine Richtung, in mindestens eine Betätigungsstellung verursachen. Günstigerweise ist es, wenn eine Auslenkung in eine Mehrzahl von Betätigungsstellungen möglich ist, wobei die Pralleinrichtung abhängig davon, an welcher Stelle sie das Hindernis kontaktiert, ausgelenkt wird. Beispielsweise kann eine Auslenkung in einer Längsrichtung der Fahrzeugbehandlungsanlage (insbesondere bezogen auf eine Einfahrrichtung) und/oder in einer Querrichtung erfolgen, vorzugsweise in jeweils beide Orientierungen. Vorteilhafterweise besteht die Möglichkeit einer Auslenkung in eine Richtung, die sich durch eine Überlagerung der Längsrichtung und der Querrichtung ergibt. Die Auslenkung kann somit vorzugsweise in einem beliebigen Winkel zur Einfahrrichtung und in der Einfahrrichtung selbst erfolgen. Dadurch erweist sich die Sicherungsvorrichtung als besonders vielseitig, und die Fahrzeugbehandlungsanlage weist eine hohe Betriebssicherheit auf.

Eine zum Erfassen eines Übergangs zwischen der Nichtbetätigungsstellung und einer Betätigungsstellung eingerichtete Sensoreinrichtung kann insbesondere ein verhältnismäßig schnelles Ansprechverhalten aufweisen.

Eine zum Erfassen eines Verbleibens in der Nichtbetätigungsstellung oder einer bzw. der Betätigungsstellung eingerichtete Sensoreinrichtung kann insbesondere ein verhältnismäßig störungsunempfindliches Verhalten aufweisen.

Die Kopplung der Rückstelleinrichtung mit der Pralleinrichtung und/oder der Fahrzeugbehandlungsanlage ist beispielsweise zum Übertragen eines Biegedrehmoments, insbesondere eines bezüglich der Rückstelleinrichtung biegenden und/oder tordierenden Schnittmoments ausgestaltet.

Vorzugsweise sind sowohl die Kopplung der Rückstelleinrichtung mit der Pralleinrichtung wie auch die Kopplung der Rückstelleinrichtung mit der Fahrzeugbehandlungsanlage zum Drehmomentübertragen eingerichtet.

Die Kopplung der Rückstelleinrichtung mit der Pralleinrichtung und/oder die Kopplung der Rückstelleinrichtung mit der Fahrzeugwaschanlage können beispielsweise spielbehaftet sein. Mittels der spielbehafteten Kopplung kann beispielsweise eine Vorspannung der Rückstelleinrichtung vermieden werden.

Die Kopplung der Rückstelleinrichtung mit der Pralleinrichtung und/oder die Kopplung der Rückstelleinrichtung mit der Fahrzeugwaschanlage können beispielsweise spielfrei sein. Mittels der spielfreien Kopplung kann beispielsweise eine präzisere Rückstellung erreicht werden.

Vorzugsweise ist die Rückstelleinrichtung an der Pralleinrichtung und/oder an der Fahrzeugbehandlungsanlage mittels eines wenigstens 5-wertigen Lagers gelagert. Eine 5-wertige Lagerung kann beispielsweise eine besonders steife Anbindung der Rückstelleinrichtung ermöglichen.

Beispielsweise ist die Rückstelleinrichtung an der Pralleinrichtung und/oder an der Fahrzeugbehandlungsanlage mittels eines 6-wertigen Lagers gelagert. Eine 6-wertige Lagerung kann beispielsweise eine eindeutige Anbindung der Rückstelleinrichtung ermöglichen.

Die Halteeinrichtung kann insbesondere an einer Trageinrichtung der Fahrzeugbehandlungsanlage festlegbar oder festgelegt sein. Eine starre oder eine bewegliche Festlegung können vorgesehen sein.

Vorzugsweise ist die Halteeinrichtung zum elastischen Halten der Pralleinrichtung an der Trageinrichtung ausgestaltet. Dies kann beispielsweise eine - beispielsweise bei kleinen Auslenkungen - nur durch die Rückstelleinrichtung eingeschränkte Bewegung der Pralleinrichtung bewirken. Hierdurch können vorzugsweise Oszillationen der Pralleinrichtung vermieden werden, zum Beispiel um Schäden an einem Lack eines mit der Pralleinrichtung in Kontakt getretenen Fahrzeugs zu vermeiden.

Falls die Rückstelleinrichtung an einem Ende der Rückstelleinrichtung mit der Pralleinrichtung gekoppelt und an einem anderen Ende der Rückstelleinrichtung mit der Fahrzeugbehandlungsanlage koppelbar oder gekoppelt ist, kann beispielsweise die Pralleinrichtung im Kontaktfall weit auslenken. Dies kann beispielsweise Schäden an einem Lack eines mit der Pralleinrichtung in Kontakt getretenen Fahrzeugs vermeiden.

Vorzugsweise ist die Rückstelleinrichtung mit der Pralleinrichtung gekoppelt und mit der Fahrzeugbehandlungsanlage koppelbar oder gekoppelt ist, um die Pralleinrichtung ohne Kontakt mit dem Hindernis während eines Betriebs der Fahrzeugbehandlungsanlage in der Nichtbetätigungsstellung zu halten, beispielsweise bei einem Verfahren der Trageinrichtung. Auf diese Weise kann beispielsweise ein störungsfreier Betrieb erreicht werden.

Bei einer Fahrzeugbehandlungsanlage vom Portaltyp können beispielsweise abrupte Stöße aus einer Verfahreinrichtung in die Trageinrichtung eingeleitet werden, welche zu Fehlerfassungen durch die Sensoreinrichtung führen können. Als Abhilfe ist vorzugsweise die Rückstelleinrichtung dimensioniert, um die Pralleinrichtung ohne Kontakt mit dem Hindernis während eines Betriebs der Fahrzeugbehandlungsanlage in der Nichtbetätigungsstellung zu halten.

Die Rückstelleinrichtung ist oder umfasst vorzugsweise ein Federelement. Das Federelement kann beispielsweise zum elastischen Rückstellen einer Auslenkung gestaltet und/oder angeordnet sein. Das Federelement ist oder umfasst vorzugsweise ein(en) Metallkörper und/oder ein(en) Kunststoffkörper. Metall kann beispielsweise besonders korrosionsbeständig sein. Kunststoff kann beispielsweise eine gute Dämpfungseigenschaft aufweisen.

Das Federelement kann beispielsweise wenigstens einen Schraubenabschnitt bzw. Schraubenfederabschnitt aufweisen und beispielsweise zumindest abschnittsweise als Schraubenfeder ausgestaltet sein. Das Federelement kann beispielsweise wenigstens einen Stababschnitt aufweisen und beispielsweise zumindest abschnittsweise als Stabfeder und/oder Balkenfeder ausgestaltet sein. Das Federelement kann beispielsweise wenigstens einen Bandabschnitt aufweisen und beispielsweise zumindest abschnittsweise als Bandfeder ausgestaltet sein. Die vorstehenden Varianten stellen lediglich besonders bevorzugte Ausführungsformen dar und geben keine vollständige Liste möglicher Varianten wieder.

Vorzugsweise umgreift ein (jeweiliger) Endabschnitt der Rückstelleinrichtung einen an der Pralleinrichtung festgelegten und/oder einen an der Fahrzeugbehandlungsanlage festlegbaren oder festgelegten Vorsprung. Unter einem Umgreifen kann zum Beispiel ein vollständiges Umgreifen, ein Umgreifen wenigstens einer Hälfte eines Querschnitts des Vorsprungs und/oder ein Umgreifen mehrerer in Umfangsrichtung um den Vorsprung verteilter Abschnitte verstanden werden. Der Vorsprung kann beispielsweise einen im Wesentlichen runden Querschnitt, einen eckigen Querschnitt und/oder einen sonstigen regelmäßigen oder unregelmäßigen Querschnitt aufweisen. Der Vorsprung kann beispielsweise ein Teil, wie ein einstückiger Teil und/oder ein Endteil, der Pralleinrichtung sein. Der Vorsprung kann beispielsweise an der Pralleinrichtung und/oder der Fahrzeugbehandlungsanlage und/oder einer mit der Fahrzeugbehandlungsanlage verbindbaren Rückstell-Lagereinrichtung festgelegt sein, wie zum Beispiel angeschweißt oder angeschraubt. Indem die Rückstelleinrichtung den Vorsprung umgreift, kann beispielsweise konstruktiv einfach eine zum Drehmoment-Übertragen geeignete Kopplung umgesetzt sein.

Vorzugsweise greift ein (jeweiliger) Endabschnitt der Rückstelleinrichtung in eine an der Pralleinrichtung gebildete und/oder eine an der Fahrzeugbehandlungsanlage gebildete oder angeordnete Aufnahme ein. Die Aufnahme kann beispielsweise als ein Loch, eine Hülse, eine Schelle, eine Klemme, ein Schlitz, eine Nut und/oder ein Greifer ausgestaltet sein. Die Aufnahme kann beispielsweise einen im Wesentlichen runden Querschnitt, einen eckigen Querschnitt und/oder einen sonstigen regelmäßigen oder unregelmäßigen Querschnitt aufweisen. Indem die Rückstelleinrichtung in die Aufnahme eingreift, kann beispielsweise konstruktiv einfach eine zum Drehmoment-Übertragen geeignete Kopplung umgesetzt sein.

Die Aufnahme kann in der Pralleinrichtung und/oder in der Fahrzeugbehandlungsanlage und/oder in einer mit der Fahrzeugbehandlungsanlage verbindbaren Rückstell-Lagereinrichtung gebildet und/oder daran als separates Teil oder Abschnitt eines separaten Teils angebracht sein.

Die Rückstelleinrichtung kann beispielsweise an der Pralleinrichtung und/oder an der Fahrzeugbehandlungsanlage unmittelbar festgelegt sein, um beispielsweise eine besonders robuste Konstruktion zu erzielen. Die Rückstelleinrichtung kann beispielsweise an der Pralleinrichtung und/oder an der Fahrzeugbehandlungsanlage mittelbar festgelegt sein, um beispielsweise eine Dämpfeinrichtung zwischenzuschalten. Die Rückstelleinrichtung kann beispielsweise an der Fahrzeugbehandlungsanlage unter Zwischenschalten einer Rückstell-Lagereinrichtung festlegbar und/oder festgelegt sein, um beispielsweise verschiedenartige und/oder optional vorhandene Rückstelleinrichtungen oder Sicherungsvorrichtungen festlegen zu können.

Denkbar ist, dass die Sicherungsvorrichtung im Umfeld der Fahrzeugbehandlungsanlage angeordnet ist und nicht direkt an der Fahrzeugbehandlungsanlage verwendet wird.

Vorzugsweise ist ein Endabschnitt der Rückstelleinrichtung an der Pralleinrichtung und/oder an der Fahrzeugbehandlungsanlage oder der Rückstell-Lagereinrichtung festgelegt, beispielsweise lösbar, formschlüssig, kraftschlüssig und/oder stoffschlüssig.

Eine verliersichere Festlegung und/oder Lagerung kann vorgesehen sein.

Beispielsweise in dem Fall, dass die Rückstelleinrichtung eine Schraubenfeder ist oder umfasst, kann mit Vorteil vorgesehen sein, dass in einem entspannten Zustand der Schraubenfeder ein Abstand zwischen jeweils zwei benachbarten Windungen höchstens so breit wie ein Drahtdurchmesser bzw. eine maximale Erstreckung des Schraubendrahts quer zu der Windungsrichtung ist. Indem die Windungen nahe beieinander angeordnet sind, kann eine Schraubenfeder mit vergleichsweise hoher Federsteifigkeit eingesetzt werden.

Beispielsweise in dem Fall, dass die Rückstelleinrichtung eine Schraubenfeder ist oder umfasst, kann mit Vorteil vorgesehen sein, dass in dem entspannten Zustand der Schraubenfeder jeweils zwei benachbarte Windungen aneinander anliegen. Hierdurch kann beispielsweise eine Dämpfung infolge einer Reibung benachbarter Windungen erzielt werden. Aneinander anliegende Windungen können also zu einem Abklingen einer Schwingung und daher zu einer raschen (Wieder-) Einnahme der Nichtbetätigungsstellung führen. Vorzugsweise wirkt die Reibung einer unbeabsichtigten Auslenkung der Pralleinrichtung entgegen.

Falls beispielsweise die Sicherungsvorrichtung frei von einer magnetischen Rückstellung bzw. einer magnetischen Rückstelleinrichtung ist, kann beispielsweise eine Störung infolge magnetisch angezogener Fremdkörper verhindert werden.

Vorzugsweise ist außer der oben beschriebenen Rückstelleinrichtung keine weitere Rückstelleinrichtung vorgesehen. Dadurch kann eine konstruktiv einfache Ausgestaltung der Sicherungsvorrichtung erzielt werden.

Insbesondere kann vorgesehen sein, dass die oben beschriebene Rückstelleinrichtung die einzige Rückstelleinrichtung zum - vorzugsweise elastischen - Rückstellen der Pralleinrichtung in die Nichtbetätigungsstellung ist.

Die Sensoreinrichtung kann zum Erfassen der Pralleinrichtung in der Nichtbetätigungsstellung eingerichtet sein.

Die Sensoreinrichtung kann alternativ oder ergänzend zum Erfassen der Pralleinrichtung in einer aus der Nichtbetätigungsstellung ausgelenkten Betätigungsstellung eingerichtet sein. Die Sensoreinrichtung kann dazu eingerichtet sein, zu erfassen, dass die Pralleinrichtung aus der Nichtbetätigungsstellung in eine Betätigungsstellung ausgelenkt ist. Hierdurch kann zum Beispiel eine Sicherungsaktion durch die Sicherungsvorrichtung ausgelöst werden oder auslösbar sein.

Beispielsweise kann die Sicherungsvorrichtung oder eine mit dieser gekoppelte Steuervorrichtung der Fahrzeugbehandlungsanlage dazu eingerichtet sein, eine Antriebseinrichtung zu deaktivieren und/oder einen Hinweis an einen Bediener auszugeben, falls sie die Pralleinrichtung nicht in der Nichtbetätigungsstellung und/oder in einer aus der Nichtbetätigungsstellung ausgelenkten Betätigungsstellung erfasst.

Die Sensoreinrichtung ist zum berührungslosen Erfassen der Pralleinrichtung eingerichtet, um beispielsweise eine spritzwasserunempfindliche Vorrichtung zu schaffen. Die Sensoreinrichtung kann ergänzend zum kontaktbehafteten Erfassen der Pralleinrichtung eingerichtet sein, um beispielsweise eine robuste Vorrichtung zu schaffen.

Die Sensoreinrichtung kann zum induktiven und/oder kapazitiven Erfassen der Pralleinrichtung eingerichtet sein, um beispielsweise eine feinfühlige Vorrichtung zu schaffen.

Vorzugsweise ist an der Pralleinrichtung ein durch die Sensoreinrichtung erfassbares Detektionsteil angeordnet. Das Detektionsteil ist beispielsweise ein auf die Sensoreinrichtung zum Erfasst-Werden durch die Sensoreinrichtung abgestimmtes Element oder es weist ein solches auf. Hierdurch kann beispielsweise zuverlässig die Stellung der Pralleinrichtung erfasst werden.

Insbesondere kann eine veränderbare Position des Detektionsteils zum Einstellen eines Abstands des Detektionsteils zu der Sensoreinrichtung vorgesehen sein. Hiermit kann beispielsweise eine Erfassungscharakteristik an eine konkrete Einbaulage angepasst werden. Die Einstellbarkeit ermöglicht vorzugsweise eine Justage bei Montage und/oder Nachrüstung am Einsatzort mit einfachen Mitteln. Bevorzugte Einstellmechanismen umfassen zum Beispiel ein stufenlos verstellbares Gewinde oder einen abgestuft verstellbaren Rastermechanismus.

Optional sind die Sensoreinrichtung und die Rückstelleinrichtung an unterschiedlichen Seiten eines Fußabschnitts der Pralleinrichtung angeordnet. Zum Vergleich wird eine Sicherungsvorrichtung angenommen, bei der die Sensoreinrichtung und die Rückstelleinrichtung an derselben Seite beispielsweise eines Fußabschnitts angeordnet sind. Bei der Vergleichs-Sicherungsvorrichtung wäre die Rückstelleinrichtung vorzugsweise so weit von der Sensoreinrichtung zu beabstanden, dass die Rückstelleinrichtung bei einer großen Auslenkung nicht in Kontakt mit der Sensoreinrichtung gelangt. Indem die Sensoreinrichtung und die Rückstelleinrichtung bei der vorliegenden bevorzugten Ausführungsform an unterschiedlichen Seiten der Pralleinrichtung angeordnet werden, kann vorzugsweise eine Kollision der Sensoreinrichtung und der Rückstelleinrichtung auch bei großer Auslenkung der Pralleinrichtung verhindert werden. Dadurch können die Pralleinrichtung und die Rückstelleinrichtung beispielsweise räumlich verhältnismäßig nahe beieinander angeordnet sein und eine kompakte Bauform erzielt werden. Vorzugsweise kann aufgrund der räumlichen Nähe der Rückstelleinrichtung zur Sensoreinrichtung die Pralleinrichtung rascher und zuverlässiger eine eindeutig durch die Sensoreinrichtung detektierbare Stellung einnehmen.

Bevorzugt sind die Sensoreinrichtung und die Rückstelleinrichtung an entgegengerichteten, insbesondere einander gegenüberliegenden Seiten des Fußabschnitts angeordnet. Hierdurch kann die Kopplung der Rückstelleinrichtung an der Pralleinrichtung beispielsweise besonders nahe der Sensoreinrichtung platziert werden. Dies benötigt wenig Bauraum.

Die Sensoreinrichtung kann eine Sensorachse definieren.

Entlang der Sensorachse kann zum Beispiel die Pralleinrichtung in der Nichtbetätigungsstellung und/oder eine Auslenkung der Pralleinrichtung aus der Nichtbetätigungsstellung in eine Betätigungsstellung erfassbar sein.

Die Sensorachse und eine Achse der Rückstelleinrichtung können vorzugsweise miteinander fluchten.

Die Sensorachse und die Achse der Rückstelleinrichtung können sich beispielsweise schneiden.

Die Sensorachse und die Achse der Rückstelleinrichtung können zum Beispiel höchstens um das Dreifache eines Durchmessers der Rückstelleinrichtung und/oder der Sensoreinrichtung versetzt sein. Die Sensorachse und die Achse der Rückstelleinrichtung können bevorzugt höchstens um das Zweifache eines Durchmessers der Rückstelleinrichtung und/oder der Sensoreinrichtung versetzt sein. Die Sensorachse und die Achse der Rückstelleinrichtung können noch bevorzugter höchstens um das Einfache eines Durchmessers der Rückstelleinrichtung und/oder der Sensoreinrichtung versetzt sein.

Die Sensorachse und die Achse der Rückstelleinrichtung können bei einer Ausführungsform der Erfindung windschief zueinander angeordnet sein.

Gemäß einer bevorzugten Ausführungsform der Erfindung weist die Pralleinrichtung einen Fußabschnitt, einen Kopfabschnitt und einen den Fußabschnitt mit dem Kopfabschnitt verbindenden Mittelabschnitt auf. Der Kopfabschnitt ist vorzugsweise an der Halteeinrichtung festgelegt. Der Fußabschnitt ist vorzugsweise mit der Rückstelleinrichtung und/oder der Sensoreinrichtung gekoppelt. Der Mittelabschnitt kann vorzugswiese als ein Hebel konfiguriert sein, um eine kleine Auslenkung des Mittelabschnitts in Folge eines Kontakts des Mittelabschnitts mit dem Hindernis in eine größere Auslenkung des Fußabschnitts aus der Nichtbetätigungsstellung in eine Betätigungsstellung zu übersetzen.

Um beispielsweise einen Kontakt eines Hindernisses mit der Fahrzeugbehandlungsanlage zu erkennen und/oder einem Fahrzeugbehandlungsaggregat zu vermeiden kann vorzugsweise an dem Mittelabschnitt beispielsweise ein über ein Fahrzeugbehandlungsaggregat, insbesondere en Seitenbehandlungsaggregat, insbesondere eine Radwaschbürste, in Richtung auf einen Fahrzeugbehandlungsplatz, insbesondere einen Waschplatz, ragender Vorsprungabschnitt gebildet sein.

Eine Form und/oder ein Verlauf des Vorsprungabschnitts ist vorzugsweise an eine Form der Fahrzeugbehandlungsanlage und/oder eines durch die Fahrzeugbehandlungsanlage getragenen Fahrzeugbehandlungsaggregats und/oder eine Form eines durch die Fahrzeugbehandlungsanlage definierten Fahrzeugbehandlungsplatzes, beispielsweise eines Waschplatzes, angepasst.

Vorzugsweise ist der Vorsprungabschnitt zum Vorspringen über die Sensoreinrichtung und/oder die Rückstelleinrichtung in Richtung auf einen Fahrzeugbehandlungsplatz, insbesondere einem Waschplatz, gebildet. Hierdurch können die Sensoreinrichtung und/oder die Rückstelleinrichtung vor einer Kollision mit dem Hindernis geschützt werden.

Beispielsweise kann der Vorsprungabschnitt eine im Wesentlichen dreieckig vorspringende Form haben.

Vorzugsweise springt der Vorsprungabschnitt über eine Strecke von mindestens 20 cm, vorzugsweise mindestens 50 cm, stärker bevorzugt mindestens 75 cm entlang des Abstands von dem Fußabschnitt zu dem Kopfabschnitt vor. Auf diese Weisen kann die Sicherungsvorrichtung beispielsweise an eine verschiedenartige Hindernisgrößen angepasst sein.

Zumindest der Mittelabschnitt kann insbesondere aus einem Rohr gebildet sein oder ein solches umfassen. Ein Rohr ist ein Hohlkörper, und daher im Allgemeinen weniger schwer als ein Vollkörper. Indem ein Rohr als Mittelabschnitt oder als Teil des Mittelabschnitts verwendet wird, kann die Pralleinrichtung infolge eines Kontakts mit dem Hindernis rascher ansprechen. Vorzugsweise ist der Vorsprungabschnitt durch wenigstens eine Biegung des Rohrs gebildet, beispielsweise um zusätzliches Material im Bereich des Vorsprungs zu vermeiden.

Das Rohr kann beispielsweise einen runden Querschnitt aufweisen, beispielsweise um bei Kontakten aus unterschiedlichen Richtungen gleiches Verhalten zu zeigen. Das Rohr kann beispielsweise einen unrunden Querschnitt aufweisen, beispielsweise um abhängig von einer Richtung eines Kontakts ein unterschiedliches Verhalten zu zeigen.

Vorzugsweise ist der Kopfabschnitt durch eine elastische Puffereinrichtung umgriffen, welche vorzugsweise zwischen den Kopfabschnitt und die Halteeinrichtung geschaltet sein kann. Dies kann beispielsweise ein elastisches Auslenken der Pralleinrichtung ermöglichen.

Die eingangs gestellte Aufgabe wird auch durch eine erfindungsgemäße Fahrzeugbehandlungsanlage zum Behandeln, insbesondere zum Waschen und/oder Polieren, von Fahrzeugen gelöst, aufweisend eine Sicherungsvorrichtung der voranstehend beschriebenen Art zum kontaktbehafteten Erfassen des Hindernisses und eine Trageinrichtung, insbesondere eine Tragsäule, zum Tragen des Fahrzeugbehandlungsaggregats, wobei die Sicherungsvorrichtung an der Trageinrichtung zu einem Fahrzeugbehandlungsplatz, insbesondere einem Fahrzeugwaschplatz, hin angebracht ist.

Die Sicherungsvorrichtung kann die Trageinrichtung zum Beispiel in Richtung auf den Fahrzeugbehandlungsplatz absichern. Bei dem Fahrzeugbehandlungsaggregat handelt es sich zum Beispiel um eine Radwaschbürste, die sich hinter dem Vorsprungabschnitt befindet und gezielt durch diesen abgesichert wird.

Die Pralleinrichtung erstreckt sich vorteilhafterweise über die gesamte Höhe der Trageinrichtung bis zum Boden oder nahezu bis zum Boden.

Die Fahrzeugbehandlungsanlage mit der erfindungsgemäßen Sicherungsvorrichtung zeichnet sich vorzugsweise durch ein rasches und zuverlässiges Ansprechen der Sicherungsvorrichtung bei einem Kontakt der Pralleinrichtung mit dem Hindernis aus.

Vorzugsweise definiert die Anordnung des Fahrzeugbehandlungsaggregats an der Fahrzeugbehandlungsanlage einen Behandlungsplatz für ein Fahrzeug, insbesondere einen Waschplatz. Vorzugsweise springt der optionale Vorsprungabschnitt der Sicherungsvorrichtung von der Tragsäule der Fahrzeugbehandlungsanlage aus in Richtung des Behandlungsplatzes vor.

Vorzugsweise weisen die Fahrzeugbehandlungsvorrichtung und/oder die Sicherungsvorrichtung eine Steuereinrichtung auf. Mittels der Steuereinrichtung kann beispielsweise die Fahrzeugbehandlungsanlage oder ein Teil derselben steuerbar sein. Informationen der Sensoreinrichtung können vorzugsweise von der Steuereinrichtung verarbeitet werden.

Vorzugsweise ist die Sensoreinrichtung mit der Steuereinrichtung zum Übertragen eines Signals gekoppelt zum Übertragen eines Signals, das indikativ für die Einnahme der Nichtbetätigungsstellung oder einer aus der Nichtbetätigungsstellung ausgelenkten Betätigungsstellung durch die Pralleinrichtung ist. Hierdurch kann beispielsweise eine Sicherungssteuerung mittels der Steuereinrichtung vorgenommen werden.

Die Steuereinrichtung kann insbesondere dazu eingerichtet ist, eine Bewegung der Trageinrichtung und/oder eines Fahrzeugbehandlungsaggregats zu stoppen, mittels der Sensoreinrichtung die Einnahme einer Betätigungsstellung durch die Pralleinrichtung erfasst wird. Hierdurch kann die Betriebssicherheit der Fahrzeugbehandlungsanlage gesteigert werden.

Vorzugsweise ist die Sensoreinrichtung mit einer Antriebseinrichtung der Fahrzeugbehandlungsanlage direkt oder indirekt gekoppelt, um diese auf eine Einnahme einer aus der Nichtbetätigungsstellung ausgelenkten Betätigungsstellung hin zu unterbrechen und/oder aufzunehmen. Beispielsweise kann ein Verfahren der Fahrzeugbehandlungsanlage oder eine Bewegung eines Fahrzeugbehandlungsaggregats gestoppt werden. Beispielsweise kann die Fahrzeugbehandlungsanlage oder ein Fahrzeugbehandlungsaggregat von dem Hindernis wegbewegt werden.

Die Fahrzeugbehandlungsanlage kann insbesondere eine Anzeigeeinrichtung zum Anzeigen eines Hinweises an einen Benutzer aufweisen.

Beispielsweise kann die Sensoreinrichtung mit der Anzeigeeinrichtung direkt oder indirekt gekoppelt sein, um bei einer Einnahme einer aus der Betätigungsstellung ausgelenkten Nichtbetätigungsstellung ein durch die Sensoreinrichtung ausgegebenes Signal oder dessen Ausbleiben ohne Zwischenschaltung einer Steuereinrichtung in eine Anzeige an der Anzeigeeinrichtung zu wandeln.

Vorzugsweise ist die Steuereinrichtung dazu eingerichtet, mittels der Anzeigeeinrichtung einen Hinweis anzuzeigen, falls mittels der Sensoreinrichtung die Einnahme einer Betätigungsstellung durch die Pralleinrichtung erfasst wird. Dies ermöglicht insbesondere beliebig situationsangepasste Anzeigen an einen Benutzer.

Vorzugsweise weist der Vorsprungabschnitt seinen maximalen Vorsprung in einer Höhe von ungefähr 20 cm bis 100 cm über dem Fahrzeugbehandlungsplatz bzw. Waschplatz auf. Der genannte Höhenbereich ist zum Erkennen eines Hindernisses besonders geeignet, vorzugsweise unabhängig davon, ob das Hindernis ein PKW, ein LKW, ein Mensch oder ein sonstiges Hindernis ist.

Die Fahrzeugbehandlungsanlage kann insbesondere eine Waschanlage und/oder eine Polieranlage sein. Bevorzugte Waschanlagen können insbesondere eine Portalwaschanlage und/oder eine Waschstraße sein.

Weitere vorteilhafte Ausführungsformen der erfindungsgemäßen Fahrzeugbehandlungsanlage ergeben sich durch vorteilhafte Ausführungsformen der erfindungsgemäßen Sicherungsvorrichtung, sodass diesbezüglich auf die voranstehenden Erläuterungen verwiesen wird.

Die nachfolgende Beschreibung bevorzugter Ausführungsformen dient im Zusammenhang mit der Zeichnung der näheren Erläuterung der Erfindung. Es zeigen:
- Fig. 1:: schematisch eine Vorderansicht einer Portalwaschanlage aufweisend je zwei Sicherungsvorrichtungen und Fahrzeugbehandlungsaggregate gemäß einer bevorzugten Ausführungsform der Erfindung, wobei ein Fahrzeug an einem Waschplatz steht;
- Fig. 2:: schematisch in einer Perspektivansicht ein Portal der Portalwaschanlage aus Figur 1 mit zwei Sicherungsvorrichtungen;
- Fig. 3:: schematisch in einer Perspektivansicht ein in der Fig. 2 mit "III" markiertes Detail einer der beiden Sicherungsvorrichtungen in einer Nichtbetätigungsstellung, unter Ausblendung einer Radwaschbürste;
- Fig. 4:: eine Darstellung ähnlich Fig. 3, wobei die Sicherungsvorrichtungen eine bezüglich der Nichtbetätigungsstellung ausgelenkte erste beispielhafte Betätigungsstellung einnimmt;
- Fig. 5:: eine Darstellung ähnlich der Fig. 3, wobei die Sicherungsvorrichtungen eine bezüglich der Nichtbetätigungsstellung ausgelenkte zweite beispielhafte Betätigungsstellung einnimmt;
- Fig. 6:: eine der beiden Sicherungsvorrichtungen in einer Vorderansicht;
- Fig. 7:: die Sicherungsvorrichtung der Fig. 6 in einer Seitenansicht vom Waschplatz aus gesehen;
- Fig. 8:: eine Halteeinrichtung einer der Sicherungsvorrichtungen in einer Seitenansicht;
- Fig. 9:: eine Rückstell-Lagereinrichtung einer der Sicherungsvorrichtungen in einer perspektivischen Darstellung; und
- Fig. 10:: eine Sensoreinrichtung einer der beiden Sicherungsvorrichtungen in einer Vorderansicht.

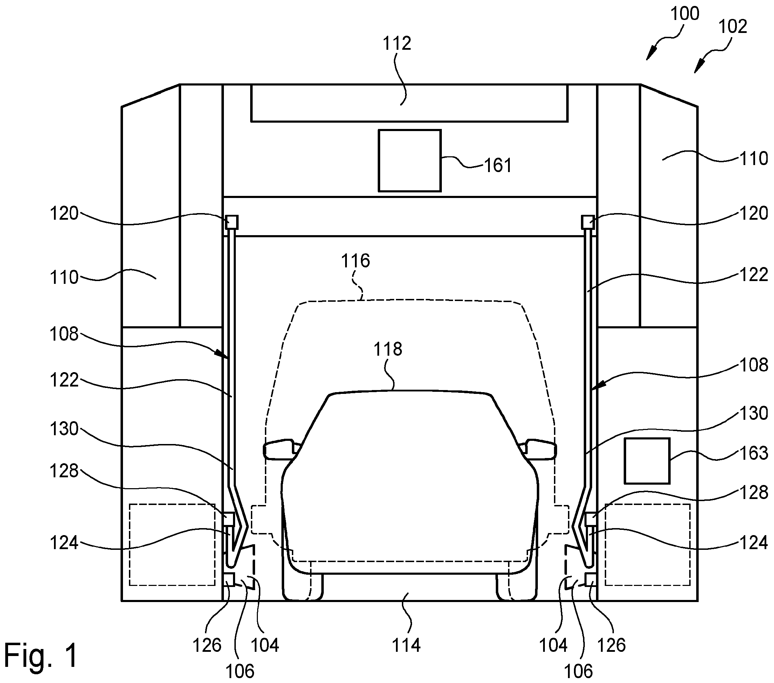

Fig. 1 zeigt schematisch eine erfindungsgemäßen Fahrzeugbehandlungsanlage 100. Die Fahrzeugbehandlungsanlage 100 ist beispielhaft eine Portalwaschanlage.

Die Fahrzeugbehandlungsanlage 100 umfasst eine portalförmige Trageinrichtung 102 zum Tragen mehrerer Funktionsvorrichtungen 104 und vorliegend beispielhaft zwei Sicherungsvorrichtungen 108. Die Funktionsvorrichtungen 104 sind Fahrzeugbehandlungsaggregate, insbesondere Seitenbehandlungsaggregate, insbesondere Radwaschbürsten 106. Über die Radwaschbürsten 106 hinaus kann die Fahrzeugbehandlungsanlage 100 weitere Fahrzeugbehandlungsaggregate umfassen, die in der Zeichnung nicht gezeigt sind, zum Beispiel Seitenbürsten, eine Dachbürste und/oder eine Trocknungseinrichtung.

Die Trageinrichtung 102 weist beispielhaft zwei Tragsäulen 110 und diese verbindend einen Querträger 112 auf. Die Trageinrichtung 102 ist beispielsweise senkrecht zur Zeichenebene der Fig. 1 durch wenigstens eine nicht dargestellten Fahrantriebseinrichtung auf einer Aufstellfläche verfahrbar. Beim Verfahren der Trageinrichtung 102 umschreiben die Tragsäulen 110 beispielhaft einen Fahrzeugwaschplatz 114, welcher ein Beispiel für einen Fahrzeugbehandlungsplatz ist.

Die Sicherungsvorrichtungen 108 sind an der Trageinrichtung 102 festgelegt, vorliegend am Querträger 112, und springen von der Trageinrichtung 102 zu dem Fahrzeugwaschplatz 114 hin vor.

In der beispielhaften Darstellung der Fig. 1 ragen die Radwaschbürsten 106 von der jeweiligen Tragsäule 110 in dem Waschplatz 114 hinein. Dabei greifen die Radwaschbürsten 106 in ein gedachtes Fahrzeugprofil 116 jeweils nicht ein. Das Fahrzeugprofil 116 kann beispielsweise ein durch die Fahrzeugbehandlungsanlage 100 vorgesehener Raum zum bestimmungsgemäßen Abstellen eines mittels der Fahrzeugbehandlungsanlage 100 zu behandelndes Fahrzeug 118 sein.

Jede der beiden Sicherungsvorrichtungen 108 weist eine Halteeinrichtung 120, eine Pralleinrichtung 122, eine Rückstelleinrichtung 124, eine Sensoreinrichtung 126 und eine optionale Rückstell-Lagereinrichtung 128 auf.

Die Halteeinrichtungen 120 sind vorliegend an dem Querträger 112 festgelegt und halten die jeweilige Pralleinrichtung 122, die nach unten hängend angebracht ist. Die Halteeinrichtungen 120 können alternativ beispielsweise an der jeweiligen Tragsäule 110 festgelegt sein. Es sind weitere Festlegungspunkte für die Halteeinrichtungen 120 denkbar, insbesondere bei einer andersartigen Bauart der Fahrzeugbehandlungsanlage 100.

Im Folgenden wird der Einfachheit halber auf nur eine Sicherungsvorrichtung 108 näher eingegangen, da die Sicherungsvorrichtungen 108 symmetrisch relativ zueinander ausgestaltet sind bezüglich einer zentralen vertikalen Symmetrieebene der Fahrzeugbehandlungsanlage 100. Die nachfolgenden Ausführungen gelten für beide Sicherungsvorrichtung 108 in entsprechender Weise.

Die an der Fahrzeugbehandlungsanlage 100 festgelegte Halteeinrichtung 120 kann beweglich an der Trageinrichtung 102 festgelegt sein, beispielweise ist sie spielbehaftet.

Die Pralleinrichtung 122 wird durch die Halteeinrichtung 120 gehalten, um aus einer Nichtbetätigungsstellung 130 in mindestens eine Betätigungsstellung durch einen Kontakt mit einem Hindernis ausgelenkt zu werden. Beispielsweise ist eine Steifigkeit der Pralleinrichtung 122 bemessen, um die Auslenkung zu ermöglichen. Beispielweise ist die Pralleinrichtung 122 durch die Halteeinrichtung 120 elastisch und/oder schwimmend gehalten.

Ausgehend von der Halteeinrichtung 120 ist die Pralleinrichtung 122 im Wesentlichen längserstreckt ausgebildet und weist einen Kopfabschnitt 132, einen Mittelabschnitt 134 und einen Fußabschnitt 136 auf. Die Festlegung an der Halteeinrichtung erfolgt über den Kopfabschnitt 132. Der Mittelabschnitt 134 ist vorliegend stangenförmig.

Der Kopfabschnitt 132 ist relativ zum Mittelabschnitt 134 abgewinkelt, vorliegend im Wesentlichen um 90°. In entsprechender Weise ist der Fußabschnitt 136 relativ zum Mittelabschnitt 134 abgewinkelt, vorliegend im Wesentlichen um 90°. Die Abwicklung erfolgt beispielsweise jeweils in Längsrichtung der Fahrzeugbehandlungsanlage 100.

Der Mittelabschnitt 134 bildet einen Vorsprungabschnitt 138 in Richtung des Waschplatzes 114. Der Vorsprungabschnitt 138 ist vorliegend im Wesentlichen dreieckförmig gebildet.

Der Vorsprungabschnitt 138 springt beispielsweise über eine Höhe von ca. 50 cm ausgehend vom Fußabschnitt 136 am Mittelabschnitt 134 vor, um beispielsweise einen möglichst großen Höhenbereich möglicher Hindernisse, einschließlich kleiner Hindernisse, kontaktbehaftet erfassen zu können. An der Fahrzeugbehandlungsanlage 100 springt der Vorsprungabschnitt 138 beispielsweise etwa 40 cm über der Aufstellfläche am Fahrzeugwaschplatz 114 am weitesten vor.

In Einfahrtsrichtung des Fahrzeugs 118 ist der Vorsprungabschnitt 138 vor der Radwaschbürste 106 angeordnet, um eine drohende Kollision mit dieser erfassen zu können.

Die Pralleinrichtung 122 umfasst vorliegend zum Ausformen der Abschnitte 132, 134 und 136 ein gebogenes Rohr, insbesondere aus einem Metallmaterial. Vorzugsweise ist das Rohr zumindest abschnittsweise mit einem verformbaren Material ummantelt, beispielsweise einem Schaumstoffmaterial. Bei einem Kontakt mit einem Hindernis, beispielsweise dem Fahrzeugs 118, ist dadurch die Gefahr eines Schadens verringert.

Die Pralleinrichtung ist an einem von der Halteeinrichtung 120 beabstandeten Ende bzw. Endabschnitt 148 mit der Rückstelleinrichtung 124 gekoppelt. Der Endabschnitt 148 ist vom Fußabschnitt 136 umfasst. Die Kopplung erfolgt vorliegend durch eine Verbindung des Fußabschnittes 136 mit der Rückstelleinrichtung 124.

Die Rückstelleinrichtung 124 ist an einem von der Pralleinrichtung 122 beabstandeten Ende bzw. Endabschnitt 156 an der Fahrzeugbehandlungsanlage 100 gekoppelt. Vorliegend erfolgt die Kopplung mittelbar durch eine Verbindung des Endes bzw. Endabschnittes 156 mittels der optionalen Rückstell-Lagereinrichtung 128. Die Rückstell-Lagereinrichtung 128 ist an der Tragsäule 110 festgelegt.

Die Sensoreinrichtung 126 ist an dem von der Halteeinrichtung 120 beabstandeten Ende bzw. Endabschnitt 148 der Pralleinrichtung 122 angeordnet und seitlich neben dem Endabschnitt positioniert.

Im vorliegenden Beispiel sind die Rückstelleinrichtung 124 und die Sensoreinrichtung 126 an unterschiedlichen Seiten des Fußabschnittes 136 angeordnet. Insbesondere liegen die Rückstelleinrichtung 124 und die Sensoreinrichtung 126 einander bezüglich des Fußabschnittes 136, insbesondere des Endabschnittes 148, gegenüber.

Dabei ist vorliegend die Rückstelleinrichtung 124 bezogen auf die Höhenrichtung und einen bestimmungsgemäßen Einsatz der Fahrzeugbehandlungsanlage 100 oberhalb des Fußabschnittes 136 angeordnet und die Sensoreinrichtung 126 unterhalb des Fußabschnittes 136. Bei einer andersartigen Ausführungsform der Erfindung könnte eine Relativanordnung in entgegengesetzter Weise vorgesehen sein.

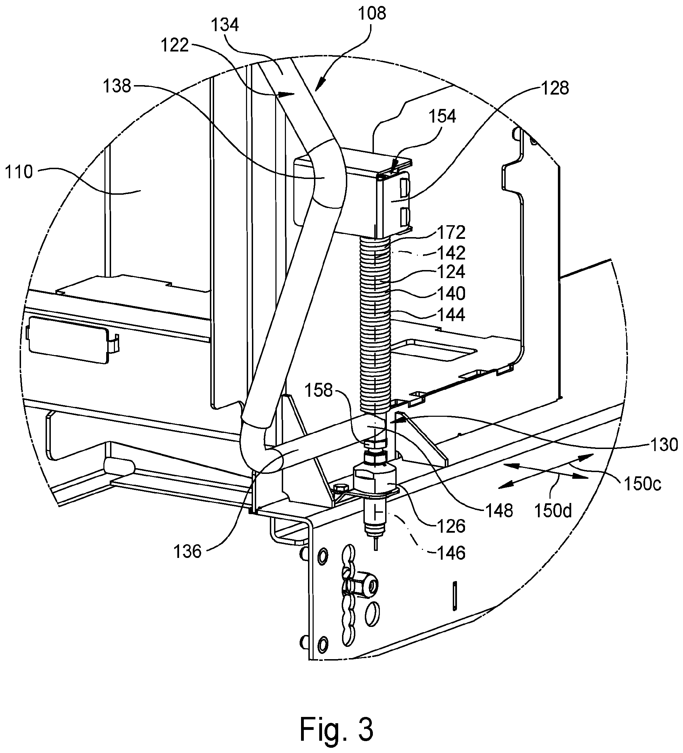

Die Sensoreinrichtung 126 ist vorliegend beispielhaft eine mittels Induktion berührungslos erfassende Sensoreinrichtung 126. Die Sensoreinrichtung 126 ist beispielhaft an der Fahrzeugbehandlungsanlage 100 festgelegt, insbesondere an der jeweiligen Tragsäule 110. Zu diesem Zweck kann zum Beispiel ein separates Halteelement vorgesehen sein (Figuren 3 bis 5 und 10).

Die Sensoreinrichtung 126 ist beispielsweise auf eine Nichtbetätigungsstellung 130 der Pralleinrichtung 122 ausgerichtet und beispielsweise dazu eingerichtet, ein Signal auszugeben, welches insbesondere indikativ für eine Einnahme beispielsweise der Nichtbetätigungsstellung 130 durch die Pralleinrichtung 122 ist.

In der Nichtbetätigungsstellung 130 kann die Pralleinrichtung 122 so ausgerichtet sein, dass der Mittelabschnitt senkrecht zur Aufstellfläche für das Fahrzeug 118 und insbesondere vertikal verläuft.

Die Rückstelleinrichtung 124 ist mit der Pralleinrichtung 122 vorliegend fest gekoppelt. Außerdem ist die Rückstelleinrichtung 124 vorliegend mit der Rückstell-Lagereinrichtung 128 fest gekoppelt. Die Rückstelleinrichtung 124 kann dementsprechend zum Beispiel beidseitig 6-wertig gelagert sein.

Über die Kopplung der Rückstelleinrichtung 124 mit der Pralleinrichtung 122 und über die Kopplung der Rückstelleinrichtung 124 mit der Fahrzeugbehandlungsanlage 100 jeweils ist bei der erfindungsgemäßen Sicherungsvorrichtung 108 jeweils ein Drehmoment übertragbar.

Wenn die Pralleinrichtung 122 durch einen Kontakt mit einem Hindernis aus der Nichtbetätigungsstellung 130 in eine Betätigungsstellung 150a, 150b ausgelenkt wird, führt dies aus diesem Grund nicht nur zu einer Verlängerung oder Stauchung der Rückstelleinrichtung 124, sondern auch zu einem Verbiegen und/oder einer Torsion der Rückstelleinrichtung 124. Es kommt somit zu einer überlagerten Verformung der jeweiligen Rückstelleinrichtung 124. Diese überlagerte Verformung führt insbesondere bei kleinen Auslenkungen bereits zu einer verhältnismäßig hohen Rückstellkraft. Entfällt der Kontakts mit dem Hindernis, hat dies eine rasche und zuverlässige Rückstellung der Pralleinrichtung 122 in die Nichtbetätigungsstellung 130 zur Folge.

Figur 3 zeigt die Nichtbetätigungsstellung 130 der Pralleinrichtung 122 in Abwesenheit eines eine Auslenkung verursachenden Kontaktes mit einem Hindernis. Die Radwaschbürste 106 ist in Figur 3 ausgeblendet.

Die Rückstelleinrichtung 124 ist vorliegend eine Schraubenfeder 140, welche sich insbesondere einer Achse 142 definiert. Die Schraubenfeder 140 ist ein Beispiel eines Federelements 144, welches die Rückstelleinrichtung 124 bildet von dieser umfasst ist.

Die Sensoreinrichtung 126 definiert eine Sensorachse 146. Entlang der Sensorachse 146 ist beispielsweise die Pralleinrichtung 122 in der Nichtbetätigungsstellung 130 erfassbar. Optional kann entlang der Sensorachse 146 eine Auslenkung der Pralleinrichtung 122 aus der Nichtbetätigungsstellung 130 in eine Betätigungsstellung erfassbar sein.

Vorliegend sind die Rückstelleinrichtung 124 und die Sensoreinrichtung 126 so an einander entgegengesetzten Seiten des Fußabschnitts 136 angeordnet, dass die Sensorachse 146 und die Achse 142 der Rückstelleinrichtung 124 miteinander fluchten, wenn die Pralleinrichtung 122 die Nichtbetätigungsstellung einnimmt.

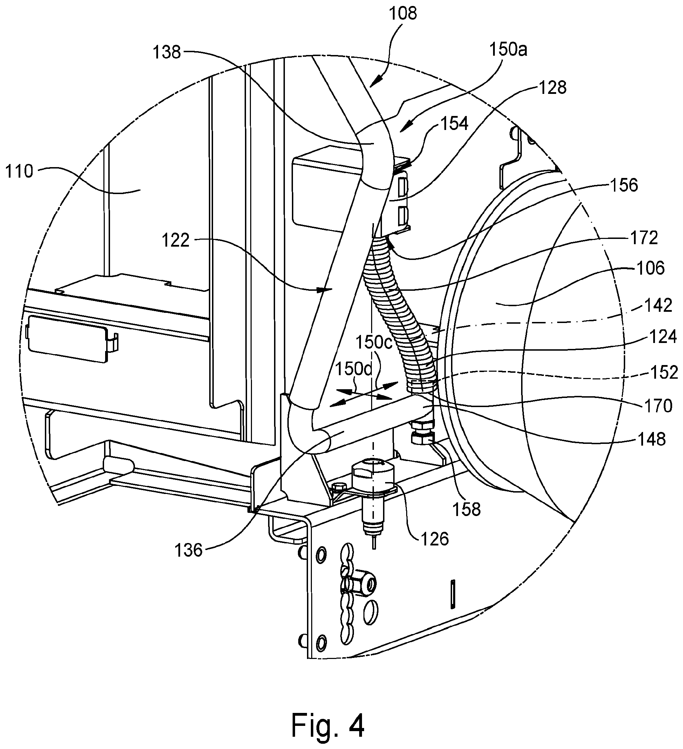

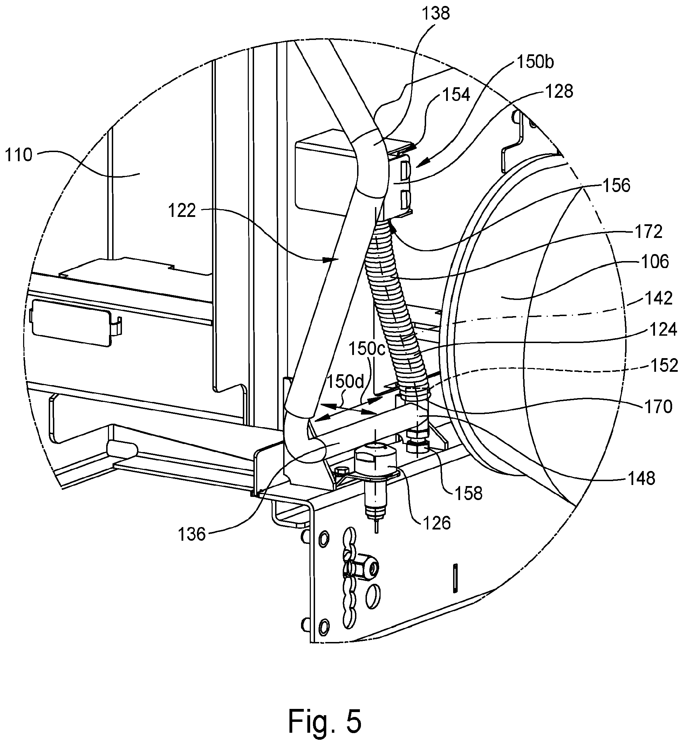

Ausgehend von der Nichtbetätigungsstellung kann ein Kontakt mit dem Hindernis eine Auslenkung der Pralleinrichtung 122 in mindestens eine Betätigungsstellung verursachen. Vorteilhaft ist es, dass eine Auslenkung in eine Mehrzahl von Betätigungsstellungen möglich ist. Hierauf wird unter Verweis auf die Figuren 4 und 5 eingegangen.

Die Figuren 4 und 5 zeigen beispielhafte mit den Bezugszeichen 150a, 150b bezeichnete Betätigungsstellungen der Pralleinrichtung 122. In den Situationen der Figuren 4 und 5 lenkt das (in der Zeichnung nicht gezeigte) Hindernis die Pralleinrichtung 122 in unterschiedliche Richtungen aus der Nichtbetätigungsstellung 130 der Fig. 3 in die jeweilige Betätigungsstellung 150a, 150b aus.

Insbesondere erfolgt im Beispiel der Figur 4 eine Auslenkung in einer Längsrichtung 150c der Fahrzeugbehandlungsanlage 100, bezogen auf eine Einfahrrichtung. Im Beispiel der Figur 150d erfolgt eine Auslenkung in einer Querrichtung 150d, die quer und insbesondere senkrecht zur Längsrichtung 150c ausgerichtet ist.

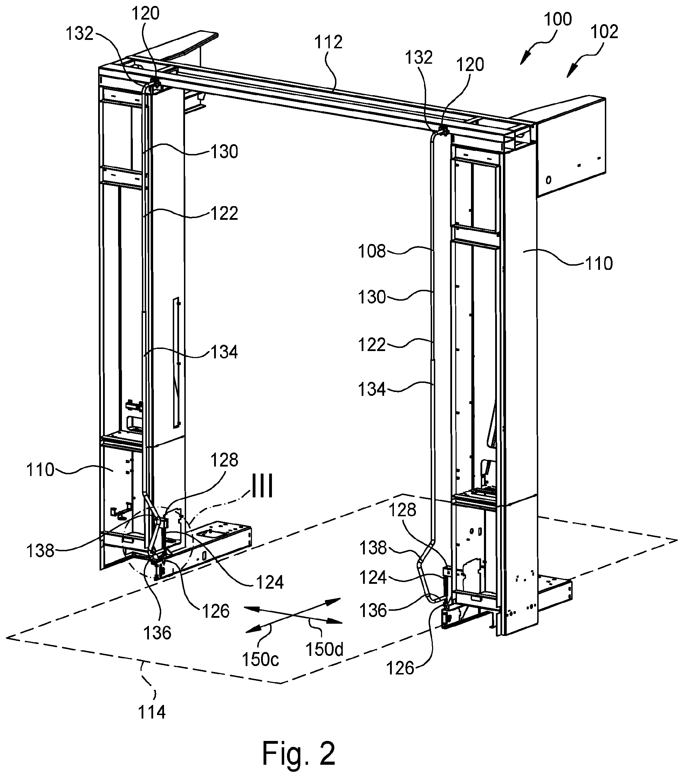

In korrespondierender Weise sind Auslenkungen in den entgegengesetzten Richtungen möglich, was durch die Doppelpfeile für die Längsrichtung 150c und die Querrichtung 150d in den Figuren 2 bis 5 verdeutlicht wird.

Es versteht sich, dass ferner insbesondere die Möglichkeit einer Auslenkung in eine Richtung besteht, die sich durch eine beliebige Überlagerung der Längsrichtung 150c und der Querrichtung 150d ergibt, also vorzugsweise in beliebigem Winkel schräg zur Einfahrrichtung. Dadurch erweist sich die Sicherungsvorrichtung 108 als besonders vielseitig, und die Fahrzeugbehandlungsanlage 100 weist eine hohe Betriebssicherheit auf.

In konstruktiver Hinsicht ist ein mit der Pralleinrichtung 122 gekoppelter Endabschnitt 152 der Schraubenfeder 140 beispielsweise fest mit dem Endabschnitt 148 der Pralleinrichtung 122 gekoppelt. Im konkreten Fall ist zum Beispiel ein Vorsprung 170 einstückig mit dem Endabschnitt 148 der Pralleinrichtung 122 ausgebildet. Der Endabschnitt 152 ist insbesondere formschlüssig über den Vorsprung 170 gestülpt und umgreift diesen fest.

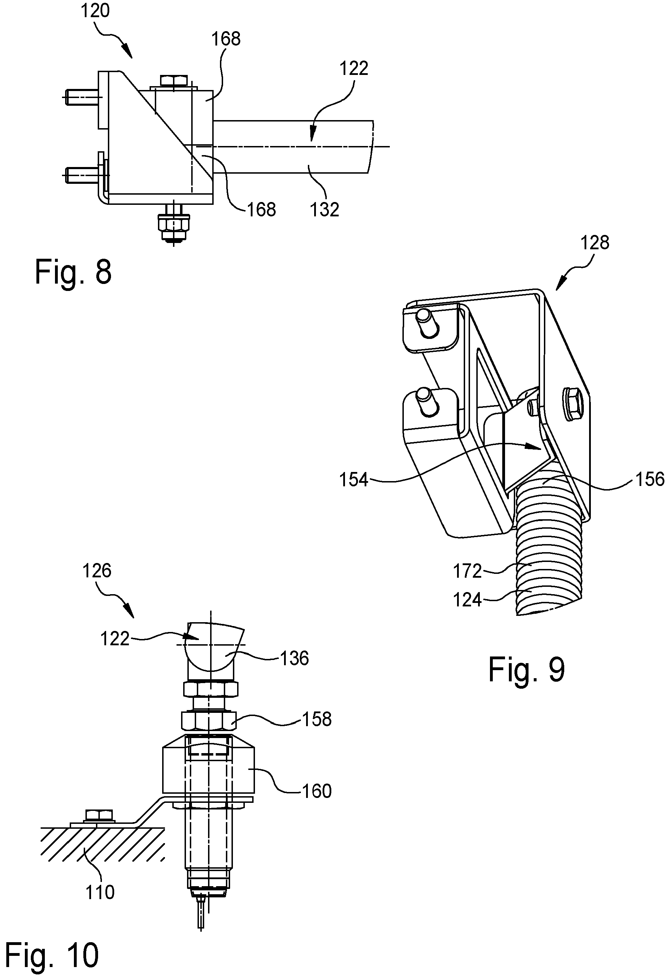

Wie beispielsweise in Figur 9 gezeigt ist, umgreift beispielhaft eine als Greifeinrichtung ausgeführte Aufnahme 154, die ein Teil der Rückstell-Lagereinrichtung 128 ist, fest einen mit der Rückstell-Lagereinrichtung 128 gekoppelten Endabschnitt 156 der Schraubenfeder 140. Die Rückstelleinrichtung 124 hierbei formschlüssig in die Aufnahme 154 ein.

Bei der in den Figuren 4 und 5 beispielhaft dargestellten Auslenkung der Pralleinrichtung 122 aus der Nichtbetätigungsstellung 130 in die jeweilige Betätigungsstellung 150a, 150b sind die Endabschnitte 152, 156 der Rückstelleinrichtung 124 relativ zueinander verlagert bzw. verdreht. Im beispielhaften Fall führt diese Relativbewegung zu einer Verbiegung der Rückstelleinrichtung 124 in eine S-Form, was in der Zeichnung durch die S-förmige Verformung der Achse 142 dargestellt ist. Diese Verbiegung bzw. Torsion wirkt als Rückstellkraft bzw. Rückstellmoment der Auslenkung entgegen.

Darüber hinaus wird insbesondere eine unbeabsichtigte Auslenkung der Pralleinrichtung 122 vermieden, zum Beispiel bei sich bewegender Fahrzeugbehandlungsanlage 100 während des Verfahrens auf der Aufstellfläche.

Außer der Rückstelleinrichtung 124 ist keine weitere Rückstelleinrichtung vorhanden, so dass die Sicherungsvorrichtung 108 eine konstruktiv einfache Ausgestaltung mit kompakter Bauform aufweist.

Wie bereits erwähnt ist die Sensoreinrichtung 126 berührungslos erfassend. Am Endabschnitt 148 der Pralleinrichtung 122 ist ein Detektionsteil 158 angeordnet (Figuren 3 bis 5, 10). Das Detektionsteil 158 ist beispielsweise als Schraubelement ausgebildet, das beispielsweise in ein nicht dargestelltes Gewinde am Endabschnitt 148 eingeschraubt ist und beispielsweise durch eine Kontermutter verliersicher festgelegt sein kann.

Das Detektionsteil 158 kann mehr oder weniger weit in den Endabschnitt 148 eingeschraubt werden, um den Abstand zur Sensoreinrichtung 126 zu verändern.

Dies erlaubt zum Beispiel eine Kalibrierung des Erfassungsverhaltens der Sicherungsvorrichtung 108, zum Beispiel nach einer Montage der Sicherungsvorrichtung 108 an der Fahrzeugbehandlungsanlage 100.

Wenn die Pralleinrichtung 122 sich in der Nichtbetätigungsstellung 130 befindet, ist das Detektionsteil 158 beispielsweise nahe einem Sensorkopf 160 der Sensoreinrichtung 126 angeordnet. In diesem Fall erfasst die Sensoreinrichtung 126 beispielsweise die Einnahme der Nichtbetätigungsstellung 130 und gibt ein entsprechendes Signal aus.

Alternativ kann vorgesehen sein, dass ein Signal nur bei Auslenkung aus der Nichtbetätigungsstellung 130 in eine Betätigungsstellung 150a, 150b ausgegeben wird.

Wenn die Pralleinrichtung 122 aus der Nichtbetätigungsstellung 130 in eine Betätigungsstellung 150a, 150b ausgelenkt ist oder ausgelenkt wird, ist das Detektionsteil 158 nicht mehr nahe dem Sensorkopf 160 und erfasst die Sensoreinrichtung 126 nicht eine Einnahme der Nichtbetätigungsstellung 130 und/oder erfasst eine Einnahme einer Betätigungsstellung 150a, 150b. In diesem Fall gibt die Sensoreinrichtung 126 ein der Einnahme der Betätigungsstellung 150a, 150b bzw. der Nicht-Einnahme der Nichtbetätigungsstellung 130 entsprechendes Signal aus.

Ein Signal der Sensoreinrichtung 126 kann beispielsweise ein digitales Signal sein. Ein Signal der Sensoreinrichtung 126 kann beispielsweise ein Stromwert und/oder ein Spannungswert, einschließlich 0 Ampere und/oder 0 Volt sein.

Eine Steuereinrichtung 161 (Figur 1) ist mit der Sensoreinrichtung 126 elektrisch leitend verbunden. Die Steuereinrichtung 161 ist insbesondere zum Betrieb der Fahrzeugbehandlungsanlage 100 ausgebildet, beispielsweise zum Ansteuern einer Antriebseinrichtung 163 der Portalwaschanlage 100 zum Verfahren auf der Aufstellfläche.

Falls die Pralleinrichtung 122 aus der Nichtbetätigungsstellung 130 durch Kontakt mit einem Hindernis in eine Betätigungsstellung 150a, 150b ausgelenkt wird, deaktiviert die Steuereinrichtung 161 die Antriebseinrichtung 163, um einen Schaden für das Hindernis und/oder die Fahrzeugbehandlungsanlage 100 zu vermeiden.

Wird beispielsweise die Pralleinrichtung 122 bei stehender Fahrzeugbehandlungsanlage 100 in eine Betätigungsstellung 150a, 150b ausgelenkt, kann die Steuereinrichtung 161 die Antriebseinrichtung 163 blockieren.

Nimmt die Pralleinrichtung 122 wieder die Nichtbetätigungsstellung 130 ein, kann die Antriebseinrichtung 163 beispielsweise aktiviert oder wieder aktiviert werden. Vorgesehen sein kann, dass zuvor eine Freigabe durch eine Bedienperson an der Steuereinrichtung 161 zu erfolgen hat.

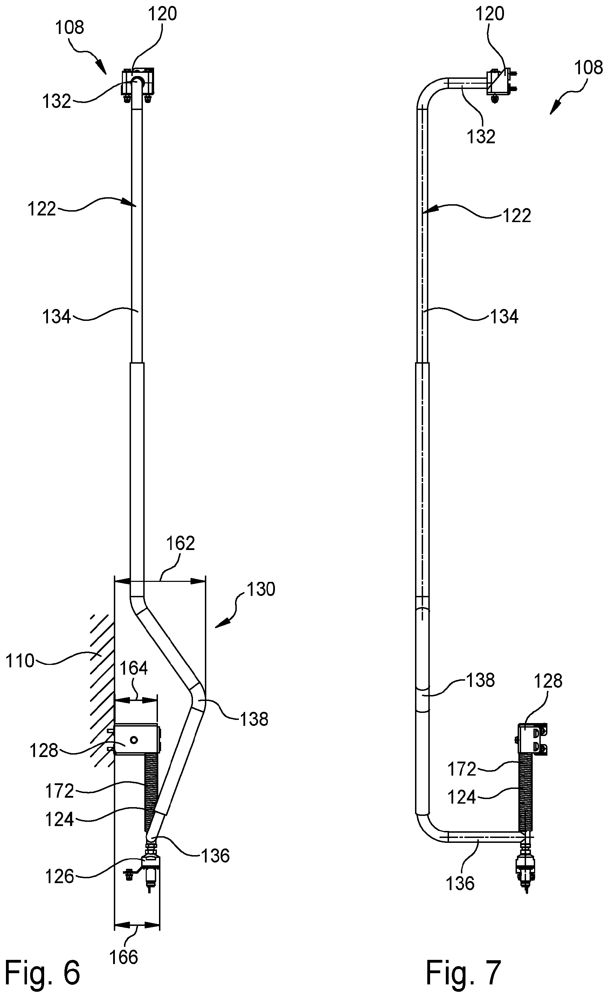

Wie zum Beispiel anhand der Figuren 1 bis 7 zu erkennen ist, ist der Vorsprungabschnitt 138 so gebildet, dass er von der Tragsäule 110 zu dem Fahrzeugwaschplatz 114 hin vorspringt.

In der Nichtbetätigungsstellung 130 ist beispielsweise ein maximaler Abstand 162 des Vorsprungabschnitts 138 zu der Tragsäule 110 größer als ein maximaler Abstand 164 der Rückstelleinrichtung 124 und der Rückstell-Lagereinrichtung 128 zu der Tragsäule 110.

In der Nichtbetätigungsstellung 130 ist beispielsweise der maximale Abstand 162 des Vorsprungabschnitts 138 größer als ein maximaler Abstand 166 der Sensoreinrichtung 126 zu der Tragsäule 110. Daher ist es wahrscheinlich, dass ein Hindernis zuerst mit der Pralleinrichtung 122 in Kontakt gelangt, und somit Schäden an der Tragsäule 110 vermieden werden.

Wie anhand der Figuren 4 und 5 zu erkennen ist, ist der Vorsprungabschnitt 138 so ausgebildet, dass er von der Tragsäule 110 zumindest so weit hervorragt, dass er die Radwaschbürste 106 abschnittsweise überdeckt, insbesondere einen Antrieb und/oder einen Bürstenteller der Radwaschbürste 106.

Da sich die Pralleinrichtung 122 nahezu über die gesamte Höhe des Portals bis nahe dem Boden erstreckt, kann nahezu die gesamte Tragsäule 110 in Richtung auf die Innenseite des Portals abgesichert werden, an der sich der Waschplatz befindet.

Figur 8 zeigt beispielhaft die Halteeinrichtung 120. Die Halteeinrichtung 120 hält beispielsweise die Pralleinrichtung 122 zwischen zwei vorzugsweise elastischen und halbschaligen Lagerelementen 168, um ein Auslenken bzw. Verschwenken der Pralleinrichtung 122 relativ zu Trageinrichtung 102 zu erleichtern.

Schließlich zeigen beispielsweise die Figuren. 3, 6, 7 und 9, dass Windungen 172 der Schraubenfeder 140 in einem entspannten Zustand der Schraubenfeder 140 aneinander anliegen. Die führt insbesondere bei Überführen in die Nichtbetätigungsstellung 130 aus einer Betätigungsstellung 150a, 150b zu einer Reibung zwischen benachbarten Windungen 172. Dies kann beispielsweise eine Rückstellbewegung dämpfen, sodass die Nichtbetätigungsstellung 130 nach einer Auslenkung rasch erreichbar ist und ein Überschwingen verhindert wird.

### Bezugszeichenliste

- 100: Fahrzeugbehandlungsanlage
- 102: Trageinrichtung
- 104: Funktionsvorrichtung
- 106: Radwaschbürste
- 108: Sicherungsvorrichtung
- 110: Tragsäule
- 112: Querträger
- 114: Fahrzeugwaschplatz
- 116: Fahrzeugprofil
- 118: Fahrzeug
- 120: Halteeinrichtung
- 122: Pralleinrichtung
- 124: Rückstelleinrichtung
- 126: Sensoreinrichtung
- 128: Rückstell-Lagereinrichtung
- 130: Nichtbetätigungsstellung
- 132: Kopfabschnitt
- 134: Mittelabschnitt
- 136: Fußabschnitt
- 138: Vorsprungabschnitt
- 140: Schraubenfeder
- 142: Achse
- 144: Federelement
- 146: Sensorachse
- 148: Endabschnitt
- 150: Betätigungsstellung
- 150a: Betätigungsstellung
- 150b: Betätigungsstellung
- 150c: Längsrichtung
- 150d: Querrichtung
- 152: Endabschnitt
- 154: Aufnahme
- 156: Endabschnitt
- 158: Detektionsteil
- 160: Sensorkopf
- 161: Steuereinrichtung
- 162: Abstand
- 163: Antriebseinrichtung
- 164: Abstand
- 166: Abstand
- 168: Lagerelement
- 170: Vorsprung
- 172: Windung

## Patentansprüche

1. Sicherungsvorrichtung (108) zum kontaktbehafteten Erfassen eines Hindernisses, insbesondere eines Fahrzeugs (118), an einer Fahrzeugbehandlungsanlage (100), insbesondere einer Fahrzeugwaschanlage, umfassend
- eine Halteeinrichtung (120), welche an einer Trageinrichtung (102) der Fahrzeugbehandlungsanlage (100) festlegbar oder festgelegt ist, zum beweglichen Festlegen der Sicherungsvorrichtung (108) an der Trageinrichtung (102),
- eine Pralleinrichtung (122), welche durch die Halteeinrichtung (120) gehalten wird und die durch einen Kontakt mit dem Hindernis aus einer Nichtbetätigungsstellung (130) in mindestens eine Betätigungsstellung (150, 15a, 150b) auslenkbar ist,
- eine Sensoreinrichtung (126), die mit der Pralleinrichtung (122) in Wirkverbindung steht und mit welcher wenigstens eine Einnahme der Nichtbetätigungsstellung (130) und/oder einer Betätigungsstellung (150a, 150b) durch die Pralleinrichtung (122) erfassbar ist, und
- eine Rückstelleinrichtung (124), die mit der Pralleinrichtung (122) gekoppelt und mit der Fahrzeugbehandlungsanlage (100) koppelbar oder gekoppelt ist, um die Pralleinrichtung (122) ohne Kontakt mit dem Hindernis in die Nichtbetätigungsstellung (130) zu überführen,
wobei über die feste Kopplung der Rückstelleinrichtung (124) mit der Pralleinrichtung (122) ein Drehmoment zwischen der Rückstelleinrichtung (124) und der Pralleinrichtung (122) übertragbar ist und/oder durch die feste Kopplung der Rückstelleinrichtung (124) mit einer an der Fahrzeugbehandlungsanlage (100) festlegbaren oder festgelegten Rückstell-Lagereinrichtung (128) ein Drehmoment zwischen der Rückstelleinrichtung (124) und der Fahrzeugbehandlungsanlage (100) übertragbar ist, **dadurch gekennzeichnet, dass** bei einer Auslenkung der Pralleinrichtung aus der Nichtbetätigungsstellung in eine Betätigungsstellung die Auslenkung infolge des übertragbaren Drehmoments zu einer Verlängerung oder Stauchung sowie zu einem Verbiegen und/oder einer Torsion der Rückstelleinrichtung (124) führt, wobei die Sensoreinrichtung (126) zum berührungslosen, insbesondere induktiven und/oder kapazitiven Erfassen der Pralleinrichtung (122) in deren Nichtbetätigungsstellung (130) oder in einer aus der Nichtbetätigungsstellung (130) ausgelenkten Betätigungsstellung (150a, 150b) eingerichtet ist.

2. Sicherungsvorrichtung (108) nach Anspruch 1, **dadurch gekennzeichnet, dass** die Rückstelleinrichtung (124) mit der Pralleinrichtung (122) gekoppelt und mit der Fahrzeugbehandlungsanlage (100) koppelbar oder gekoppelt ist, um die Pralleinrichtung (122) ohne Kontakt mit dem Hindernis während eines Betriebs der Fahrzeugbehandlungsanlage (100) in der Nichtbetätigungsstellung (130) zu halten.

3. Sicherungsvorrichtung (108) nach einem der voranstehenden Ansprüche, **dadurch gekennzeichnet, dass** die Rückstelleinrichtung (124) mindestens ein Federelement (144) ist oder umfasst, insbesondere eine Schraubenfeder (140), wobei das Federelement (144) ein(en) Metallkörper und/oder ein(en) Kunststoffkörper ist oder umfasst, und/oder dass das Federelement wenigstens einen Stababschnitt, wenigstens einen Bandabschnitt und/oder wenigstens einen Schraubenabschnitt aufweist.

4. Sicherungsvorrichtung (108) nach einem der voranstehenden Ansprüche, **dadurch gekennzeichnet, dass** zumindest eines der Folgenden gilt:
- ein Endabschnitt (152, 156) der Rückstelleinrichtung (124) umgreift einen an der Pralleinrichtung (122) festgelegten Vorsprung (170) und/oder ein Endabschnitt (152, 156) der Rückstelleinrichtung (124) umgreift einen an der Fahrzeugbehandlungsanlage (100) festlegbaren oder festgelegten Vorsprung;
- ein Endabschnitt (152, 156) der Rückstelleinrichtung (124) greift in eine an der Pralleinrichtung (122) gebildete Aufnahme (154) ein und/oder ein Endabschnitt (152, 156) der Rückstelleinrichtung (124) greift in eine an der Fahrzeugbehandlungsanlage (100) gebildete oder angeordnete Aufnahme (154) ein;
- ein Endabschnitt (152, 156) der Rückstelleinrichtung (124) ist an der Pralleinrichtung (122) und/oder an der Fahrzeugbehandlungsanlage (100) oder der Rückstell-Lagereinrichtung (128), insbesondere lösbar, formschlüssig, kraftschlüssig und/oder stoffschlüssig festgelegt.

5. Sicherungsvorrichtung (108) nach einem der voranstehenden Ansprüche, **dadurch gekennzeichnet, dass** die Rückstelleinrichtung (124) eine Schraubenfeder (140) ist oder umfasst, wobei in einem entspannten Zustand der Schraubenfeder (140) ein Abstand zwischen jeweils zwei benachbarten Windungen (172) höchstens so breit wie ein Drahtdurchmesser bzw. eine maximale Erstreckung des Schraubendrahts quer zu der Windungsrichtung (172) ist, wobei vorzugsweise in dem entspannten Zustand der Schraubenfeder (140) jeweils zwei benachbarte Windungen (172) aneinander anliegen.

6. Sicherungsvorrichtung (108) nach einem der voranstehenden Ansprüche, **dadurch gekennzeichnet, dass** außer der Rückstelleinrichtung (124) keine weitere Rückstelleinrichtung vorgesehen ist.

7. Sicherungsvorrichtung (108) nach einem der voranstehenden Ansprüche, **dadurch gekennzeichnet, dass** die Sensoreinrichtung (126) zum kontaktbehafteten Erfassen der Pralleinrichtung (122) in deren Nichtbetätigungsstellung (130) oder in einer aus der Nichtbetätigungsstellung (130) ausgelenkten Betätigungsstellung (150a, 150b) eingerichtet ist.

8. Sicherungsvorrichtung (108) nach einem der voranstehenden Ansprüche, **dadurch gekennzeichnet, dass** an der Pralleinrichtung (122) ein durch die Sensoreinrichtung (126) erfassbares Detektionsteil (158) angeordnet ist, dessen Position an der Pralleinrichtung (122) zum Einstellen eines Abstands des Detektionsteils (158) zu der Sensoreinrichtung (126) veränderbar ist.

9. Sicherungsvorrichtung (108) nach einem der voranstehenden Ansprüche, **dadurch gekennzeichnet, dass** die Sensoreinrichtung (126) und die Rückstelleinrichtung (124) an unterschiedlichen Seiten eines Fußabschnitts (136) der Pralleinrichtung (122) angeordnet sind.

10. Sicherungsvorrichtung (108) nach einem der voranstehenden Ansprüche, **dadurch gekennzeichnet, dass** die Sensoreinrichtung (126) und die Rückstelleinrichtung (124) an entgegengerichteten, insbesondere einander gegenüberliegenden Seiten des Fußabschnitts (136) angeordnet sind.

11. Sicherungsvorrichtung (108) nach einem der voranstehenden Ansprüche, **dadurch gekennzeichnet, dass** eine Sensorachse (146) der Sensoreinrichtung (126), und eine Achse (142) der Rückstelleinrichtung (124) miteinander fluchten und/oder sich schneiden und/oder höchstens um das Dreifache eines Durchmessers der Rückstelleinrichtung (124) und/oder der Sensoreinrichtung (126) versetzt und/oder windschief zueinander angeordnet sind.

12. Sicherungsvorrichtung (108) nach einem der voranstehenden Ansprüche, **dadurch gekennzeichnet, dass** die Pralleinrichtung (122) einen Fußabschnitt (136), einen Kopfabschnitt (132) und einen den Fußabschnitt (136) mit dem Kopfabschnitt (132) verbindenden Mittelabschnitt (134) aufweist, wobei an dem Mittelabschnitt (134) insbesondere ein über ein Fahrzeugbehandlungsaggregat, insbesondere eine Radwaschbürste (106), in Richtung zu einem Fahrzeugbehandlungsplatz, insbesondere einem Waschplatz (114), ragender Vorsprungabschnitt (138) gebildet ist.

13. Sicherungsvorrichtung (108) nach Anspruch 12, **dadurch gekennzeichnet, dass** der Vorsprungabschnitt (138) zum Vorspringen über die Sensoreinrichtung (126) und/oder die Rückstelleinrichtung (124) in Richtung auf einen Fahrzeugbehandlungsplatz, insbesondere einem Waschplatz (114), gebildet ist.

14. Sicherungsvorrichtung (108) nach Anspruch 12 oder 13, **dadurch gekennzeichnet, dass** der Mittelabschnitt (134) aus einem Rohr gebildet ist oder ein solches umfasst, wobei der Vorsprungabschnitt (138) durch wenigstens eine Biegung des Rohrs gebildet ist.

15. Fahrzeugbehandlungsanlage (100) zum Behandeln, insbesondere zum Waschen und/oder Polieren, von Fahrzeugen (118), aufweisend eine Sicherungsvorrichtung (108) nach einem der voranstehenden Ansprüche zum kontaktbehafteten Erfassen des Hindernisses und
eine Trageinrichtung (102), insbesondere eine Tragsäule (110), zum Tragen eines Fahrzeugbehandlungsaggregats (104, 106), insbesondere einer Radwaschbürste (106),
wobei die Sicherungsvorrichtung (108) an der Trageinrichtung (102) zu einem Fahrzeugbehandlungsplatz, insbesondere einem Fahrzeugwaschplatz (114), hin angebracht ist.

16. Fahrzeugbehandlungsanlage (100) nach Anspruch 15, **dadurch gekennzeichnet, dass** die Fahrzeugbehandlungsvorrichtung (100) und/oder die Sicherungsvorrichtung (108) eine Steuereinrichtung aufweist, wobei die Sensoreinrichtung (126) mit der Steuereinrichtung gekoppelt ist zum Übertragen eines Signals, das indikativ für die Einnahme der Nichtbetätigungsstellung (130) oder einer aus der Nichtbetätigungsstellung (130) ausgelenkten Betätigungsstellung (150a, 150b) durch die Pralleinrichtung (122) ist.

17. Fahrzeugbehandlungsanlage (100) nach Anspruch 16, **dadurch gekennzeichnet, dass** zumindest eines der Folgenden gilt:
- die Steuereinrichtung ist dazu eingerichtet, eine Bewegung der Trageinrichtung (102) und/oder eines Fahrzeugbehandlungsaggregats (104, 106) zu stoppen, falls mittels der Sensoreinrichtung (126) die Einnahme einer Betätigungsstellung (150a, 150b) durch die Pralleinrichtung (122) erfasst wird;
- die Fahrzeugbehandlungsanlage (100) weist eine Anzeigeeinrichtung zum Anzeigen eines Hinweises an einen Benutzer auf, und die Steuereinrichtung ist dazu eingerichtet, mittels der Anzeigeeinrichtung einen Hinweis anzuzeigen, falls mittels der Sensoreinrichtung (126) die Einnahme einer Betätigungsstellung (150a, 150b) durch die Pralleinrichtung (122) erfasst wird.

18. Fahrzeugbehandlungsanlage (100) nach einem der Ansprüche 15 bis 17, welche eine Portalwaschanlage ist, wobei die Fahrzeugbehandlungsanlage (100) parallel zu einem durch die Fahrzeugbehandlungsanlage (100) definierten Fahrzeugwaschplatz (100) verfahrbar ist.

## Claims

1. A safety apparatus (108) for detecting an obstacle by contact, in particular a vehicle (118), at a vehicle treatment system (100), in particular a car wash, comprising
- a retaining device (120), which is fixable or fixed to a support device (102) of the vehicle treatment system (100), for movably fixing the safety apparatus (108) to the support device (102),
- an impact device (122) which is held by the retaining device (120) and which is deflectable from a non-actuated position (130) to at least one actuated position (150, 15a, 150b) by contact with the obstacle,
- a sensor device (126), which is operatively connected to the impact device (122) and which is configured to be able to detect at least when the impact device (122) has assumed the non-actuated position (130) and/or an actuated position (150a, 150b), and
- a return device (124) which is coupled to the impact device (122) and couplable or coupled to the vehicle treatment system (100) in order to transfer the impact device (122) into the non-actuated position (130) without contact with the obstacle,
a torque being transmissible between the return device (124) and the impact device (122) via the fixed coupling between the return device (124) and the impact device (122) and/or a torque being transmissible between the return device (124) and the vehicle treatment system (100) by means of the fixed coupling between the return device (124) and a return bearing device (128) that is fixable or fixed to the vehicle treatment system (100), **characterized in that,** when the impact device is deflected from the non-actuated position to an actuated position, the deflection as a result of the transferable torque causes the return device (124) to be subjected to elongation or compression as well as to bending and/or torsion, the sensor device (126) being configured for contactless, in particular inductive and/or capacitive, detection of the impact device (122) in its non-actuated position (130) or in an actuated position (150a, 150b) that is deflected from the non-actuated position (130).

2. The safety apparatus (108) in accordance with claim 1, **characterized in that** the return device (124) is coupled to the impact device (122) and is couplable or coupled to the vehicle treatment system (100) in order to hold the impact device (122) into the non-actuated position (130) without contact with the obstacle during operation of the vehicle treatment system (100).

3. The safety apparatus (108) in accordance with any one of the preceding claims, **characterized in that** the return device (124) is or comprises at least one spring element (144), in particular a helical spring (140), the spring element (144) being or comprising a metal body and/or a plastics body, and/or **in that** the spring element has at least one bar portion, at least one strip portion and/or at least one helical portion.

4. The safety apparatus (108) in accordance with any one of the preceding claims, **characterized in that** at least one of the following applies:
- an end portion (152, 156) of the return device (124) encompasses a projection (170) fixed to the impact device (122) and/or an end portion (152, 156) of the return device (124) encompasses a projection that is fixable or fixed to the vehicle treatment system (100);
- an end portion (152, 156) of the return device (124) engages with a receptacle (154) formed on the impact device (122) and/or an end portion (152, 156) of the return device (124) engages with a receptacle (154) formed or arranged on the vehicle treatment system (100);
- an end portion (152, 156) of the return device (124) is fixed to the impact device (122) and/or to the vehicle treatment system (100) or the return bearing device (128), in particular detachably, with positive locking, force locking and/or an integral bond.

5. The safety apparatus (108) in accordance with any one of the preceding claims, **characterized in that** the return device (124) is or comprises a helical spring (140), in a relaxed state of the helical spring (140), the distance between each two adjacent windings (172) being no wider than the wire diameter or the maximum extent of the helical wire perpendicularly to the winding direction (172), two adjacent windings (172) of the helical spring (140) preferably being in contact with one another in the relaxed state thereof.

6. The safety apparatus (108) in accordance with any one of the preceding claims, **characterized in that** a further return device apart from the return device (124) is not provided.

7. The safety apparatus (108) in accordance with any one of the preceding claims, **characterized in that** the sensor device (126) is configured to detect the impact device (122) by contact in its non-actuated position (130) or in an actuated position (150a, 150b) that is deflected from the non-actuated position (130).

8. The safety apparatus (108) in accordance with any one of the preceding claims, **characterized in that** a detection part (158) which is detectable by the sensor device (126) is arranged on the impact device (122), the position of which on the impact device (122) is changeable to adjust the distance between the detection part (158) and the sensor device (126).

9. The safety apparatus (108) in accordance with any one of the preceding claims, **characterized in that** the sensor device (126) and the return device (124) are arranged on different sides of a base portion (136) of the impact device (122).

10. The safety apparatus (108) in accordance with any one of the preceding claims, **characterized in that** the sensor device (126) and the return device (124) are arranged on opposite sides, in particular facing one another, of the base portion (136).

11. The safety apparatus (108) in accordance with any one of the preceding claims, **characterized in that** a sensor axis (146) of the sensor device (126) and an axis (142) of the return device (124) are aligned with one another and/or intersect and/or are offset by no more than three times the diameter of the return device (124) and/or the sensor device (126) and/or at an angle with respect to one another.

12. The safety apparatus (108) in accordance with any one of the preceding claims, **characterized in that** the impact device (122) has a base portion (136), a head portion (132) and a central portion (134) connecting the base portion (136) to the head portion (132), a projecting portion (138) in particular being formed on the central portion (134) that protrudes beyond a vehicle treatment unit, in particular a wheel washing brush (106), toward a vehicle treatment area, in particular a wash area (114).

13. The safety apparatus (108) in accordance with claim 12, **characterized in that** the projecting portion (138) is formed to protrude over the sensor device (126) and/or the return device (124) in the direction of a vehicle treatment area, in particular a wash area (114).

14. The safety apparatus (108) in accordance with claim 12 or 13,
**characterized in that** the central portion (134) is formed from or comprises a tube, the projecting portion (138) being formed by at least one bend in the tube.

15. A vehicle treatment system (100) for treating, in particular washing and/or polishing, vehicles (118), having
a safety apparatus (108) in accordance with any one of the preceding claims for detecting the obstacle by contact, and
a support device (102), in particular a support column (110), for supporting a vehicle treatment unit (104, 106), in particular a wheel washing brush (106),
wherein the safety apparatus (108) is attached to the support device (102) so as to face toward a vehicle treatment area, in particular a vehicle wash area (114).

16. The vehicle treatment system (100) in accordance with claim 15,
**characterized in that** the vehicle treatment apparatus (100) and/or the safety apparatus (108) has/have a control device, the sensor device (126) being coupled to the control device for transmitting a signal that is indicative of the impact device (122) assuming the non-actuated position (130) or an actuated position (150a, 150b) that is deflected from the non-actuated position (130).

17. The vehicle treatment system (100) in accordance with claim 16,
**characterized in that** at least one of the following applies:
- the control device is configured to stop the support device (102) and/or a vehicle treatment unit (104, 106) from moving if the sensor device (126) detects that the impact device (122) has assumed an actuated position (150a, 150b);
- the vehicle treatment system (100) has a display device for displaying information to a user, and the control device is configured to display a message via the display device if the sensor device (126) detects that the impact device (122) has assumed an actuated position (150a, 150b).

18. The vehicle treatment system (100) in accordance with claims 15 to 17, which is a gantry car wash, wherein the vehicle treatment system (100) is movable in parallel with a vehicle wash area (100) defined by the vehicle treatment system (100).

## Revendications

1. Dispositif de sécurité (108) pour détecter par contact un obstacle, en particulier un véhicule (118), dans une installation de traitement de véhicules (100), en particulier une installation de lavage de véhicules, comprenant
- un dispositif de retenue (120) qui peut être fixé ou est fixé à un dispositif de support (102) de l'installation de traitement de véhicules (100) pour fixer de manière mobile le dispositif de sécurité (108) au dispositif de support (102),
- un dispositif de collision (122) qui est maintenu par le dispositif de retenue (120) et qui peut être dévié d'une position de non-actionnement (130) vers au moins une position d'actionnement (150, 15a, 150b) en cas de contact avec l'obstacle,
- un dispositif capteur (126) qui est en liaison active avec le dispositif de collision (122) et avec lequel la prise au moins de la position de non-actionnement (130) et/ou d'une position d'actionnement (150a, 150b) par le dispositif de collision (122) peut être déterminée, et
- un dispositif de rappel (124) qui est couplé au dispositif de collision (122) et qui peut être couplé ou est couplé à l'installation de traitement de véhicules (100) afin de faire passer le dispositif de collision (122) à la position de non-actionnement (130) sans contact avec l'obstacle,
un torque pouvant être transmis entre le dispositif de rappel (124) et le dispositif de collision (122) par le couplage fixe du dispositif de rappel (124) avec le dispositif de collision (122) et/ou un torque pouvant être transmis entre le dispositif de rappel (124) et l'installation de traitement de véhicules (100) par le couplage fixe du dispositif de rappel (124) avec un dispositif de palier de rappel (128) pouvant être fixé ou étant fixé à l'installation de traitement de véhicules (100), **caractérisé en ce que**, lors d'une déviation du dispositif de collision de la position de non-actionnement vers une position d'actionnement, la déviation entraîne, en raison du torque transmissible, un allongement ou un raccourcissement ainsi qu'une flexion et/ou une torsion du dispositif de rappel (124), le dispositif capteur (126) étant conçu pour détecter sans contact, en particulier de manière inductive et/ou capacitive, le dispositif de collision (122) dans sa position de non-actionnement (130) ou dans une position d'actionnement (150a, 150b) déviée de la position de non-actionnement (130).

2. Dispositif de sécurité (108) selon la revendication 1, **caractérisé en ce que** le dispositif de rappel (124) est couplé au dispositif de collision (122) et peut être couplé ou est couplé à l'installation de traitement de véhicules (100) afin de maintenir le dispositif de collision (122) dans la position de non-actionnement (130) sans contact avec l'obstacle pendant le fonctionnement de l'installation de traitement de véhicules (100).

3. Dispositif de sécurité (108) selon l'une des revendications précédentes, **caractérisé en ce que** le dispositif de rappel (124) est ou comprend au moins un élément ressort (144), en particulier un ressort hélicoïdal (140), l'élément ressort (144) étant ou comprenant un ou plusieurs corps métalliques et/ou un ou plusieurs corps en plastique, et/ou **en ce que** l'élément ressort présente au moins une partie en forme de tige, au moins une partie en forme de bande et/ou au moins une partie en forme de vis.

4. Dispositif de sécurité (108) selon l'une des revendications précédentes, **caractérisé en ce qu'**au moins l'une des conditions suivantes s'applique :
- une partie d'extrémité (152, 156) du dispositif de rappel (124) entoure une saillie (170) fixée au dispositif de collision (122) et/ou une partie d'extrémité (152, 156) du dispositif de rappel (124) entoure une saillie pouvant être fixée ou étant fixée à l'installation de traitement de véhicules (100) ;
- une partie d'extrémité (152, 156) du dispositif de rappel (124) s'engage dans un logement (154) formé sur le dispositif de collision (122) et/ou une partie d'extrémité (152, 156) du dispositif de rappel (124) s'engage dans un logement (154) formé ou disposé sur l'installation de traitement de véhicules (100) ;
- une partie d'extrémité (152, 156) du dispositif de rappel (124) est fixée au dispositif de collision (122) et/ou à l'installation de traitement de véhicules (100) ou au dispositif de palier de rappel (128), en particulier de manière amovible, par complémentarité de forme, par adhérence et/ou par liaison de matière.

5. Dispositif de sécurité (108) selon l'une des revendications précédentes, **caractérisé en ce que** le dispositif de rappel (124) est ou comprend un ressort hélicoïdal (140), dans lequel, à l'état détendu du ressort hélicoïdal (140), la distance entre deux spires adjacentes (172) est au maximum aussi large qu'un diamètre de fil ou qu'une extension maximale du fil de la vis transversalement à la direction des spires (172), deux spires adjacentes (172) étant de préférence en contact l'une avec l'autre à l'état détendu du ressort hélicoïdal (140).

6. Dispositif de sécurité (108) selon l'une des revendications précédentes, **caractérisé en ce qu'**aucun autre dispositif de rappel n'est prévu en dehors du dispositif de rappel (124).

7. Dispositif de sécurité (108) selon l'une des revendications précédentes, **caractérisé en ce que** le dispositif capteur (126) est conçu pour détecter par contact le dispositif de collision (122) dans sa position de non-actionnement (130) ou dans une position d'actionnement (150a, 150b) déviée de la position de non-actionnement (130).

8. Dispositif de sécurité (108) selon l'une des revendications précédentes, **caractérisé en ce qu'**un élément de détection (158) pouvant être détecté par le dispositif capteur (126) est agencé sur le dispositif de collision (122), la position de l'élément de détection (158) sur le dispositif de collision (122) pouvant être modifiée pour régler une distance entre l'élément de détection (158) et le dispositif capteur (126).

9. Dispositif de sécurité (108) selon l'une des revendications précédentes, **caractérisé en ce que** le dispositif capteur (126) et le dispositif de rappel (124) sont agencés sur des côtés différents d'une partie de base (136) du dispositif de collision (122).

10. Dispositif de sécurité (108) selon l'une des revendications précédentes, **caractérisé en ce que** le dispositif capteur (126) et le dispositif de rappel (124) sont agencés sur des côtés opposés, en particulier face à face, de la partie de base (136).

11. Dispositif de sécurité (108) selon l'une des revendications précédentes, **caractérisé en ce qu'**un axe de capteur (146) du dispositif capteur (126) et un axe (142) du dispositif de rappel (124) sont alignés et/ou se croisent et/ou sont décalés l'un par rapport à l'autre d'au maximum trois fois le diamètre du dispositif de rappel (124) et/ou du dispositif capteur (126) et/ou sont inclinés l'un par rapport à l'autre.

12. Dispositif de sécurité (108) selon l'une des revendications précédentes, **caractérisé en ce que** le dispositif de collision (122) présente une partie de base (136), une partie de tête (132) et une partie centrale (134) reliant la partie de base (136) à la partie de tête (132), à la partie centrale (134) étant formée en particulier une partie en saillie (138) s'étendant pardessus d'un dispositif de traitement de véhicule, en particulier une brosse de lavage de roues (106), en direction d'un emplacement de traitement de véhicule, en particulier d'un emplacement de lavage (114).

13. Dispositif de sécurité (108) selon la revendication 12, **caractérisé en ce que** la partie en saillie (138) est formée pour faire saillie au-dessus du dispositif capteur (126) et/ou du dispositif de rappel (124) en direction d'un emplacement de traitement de véhicule, en particulier d'un emplacement de lavage (114).

14. Dispositif de sécurité (108) selon la revendication 12 ou 13, **caractérisé en ce que** la partie centrale (134) est formée d'un tube ou comprend un tel tube, la partie en saillie (138) étant formée par au moins un coude du tube.

15. Installation de traitement de véhicules (100) pour traiter, en particulier pour laver et/ou polir, des véhicules (118), comprenant
un dispositif de sécurité (108) selon l'une des revendications précédentes pour détecter l'obstacle par contact et
un dispositif de support (102), en particulier une colonne de support (110), destiné à supporter un groupe de traitement de véhicules (104, 106), en particulier une brosse de lavage de roues (106),
le dispositif de sécurité (108) étant fixé sur le dispositif de support (102) en direction d'un emplacement de traitement de véhicules, en particulier d'un emplacement de lavage de véhicules (114).

16. Installation de traitement de véhicules (100) selon la revendication 15, **caractérisée en ce que** la installation de traitement de véhicules (100) et/ou le dispositif de sécurité (108) comporte un dispositif de commande, le dispositif capteur (126) étant couplé au dispositif de commande pour transmettre un signal indiquant que le dispositif de collision (122) a pris la position de non-actionnement (130) ou une position d'actionnement (150a, 150b) déviée de la position de non-actionnement (130).

17. Installation de traitement de véhicules (100) selon la revendication 16, **caractérisée en ce qu'**au moins l'une des conditions suivantes s'applique :
- le dispositif de commande est conçu pour arrêter le mouvement du dispositif de support (102) et/ou d'un groupe de traitement de véhicules (104, 106) si le dispositif capteur (126) détecte que le dispositif de collision (122) a pris une position d'actionnement (150a, 150b) ;
- l'installation de traitement de véhicules (100) comporte un dispositif d'affichage pour afficher une indication à un utilisateur, et le dispositif de commande est conçu pour afficher une indication au moyen du dispositif d'affichage si le dispositif capteur (126) détecte que le dispositif de collision (122) a pris une position d'actionnement (150a, 150b).

18. Installation de traitement de véhicules (100) selon l'une des revendications 15 à 17, qui est une installation de lavage à portique, l'installation de traitement de véhicules (100) pouvant être déplacée parallèlement à un emplacement de lavage de véhicules (100) défini par l'installation de traitement de véhicules (100).
